(19) **Europäisches Patentamt / European Patent Office / Office européen des brevets**

(11) **EP 1 734 664 B1**

(12) **EUROPEAN PATENT SPECIFICATION**

(45) Date of publication and mention
of the grant of the patent:
**20.08.2008 Bulletin 2008/34**

(51) Int Cl.:
***H04B 7/005*** *(2006.01)*

(21) Application number: **05253767.7**

(22) Date of filing: **17.06.2005**

(54) **Power control in multi-hop communication system**

Leistungsregelung im Mehrstreckenkommunikationssystem

Commande de puissance dans un système de communication à bonds multiple

(84) Designated Contracting States:
**DE FR GB IT SE**

(43) Date of publication of application:
**20.12.2006 Bulletin 2006/51**

(73) Proprietor: **FUJITSU LIMITED**
**Kawasaki 211 (JP)**

(72) Inventor: **Hart, Michael John**
**London W12 9LL (GB)**

(74) Representative: **Hitching, Peter Matthew et al**
**Haseltine Lake**
**Lincoln House**
**300 High Holborn**
**London WC1V 7JH (GB)**

(56) References cited:
**WO-A-01/50635          WO-A-20/04107693**
**US-A- 4 261 054          US-A- 5 293 639**
**US-A1- 2005 063 356**

**Description**

The present invention relates to a wireless communication system and related methods for transmitting a signal from a source apparatus to a destination apparatus, via at least one intermediate apparatus. In particular, the present invention relates to techniques which seek to improve the throughput of data in multi-hop communication systems.

It is known that the occurrence of propagation loss, or "pathloss", due to the scattering or absorption of a radio communication as it travels through space, causes the strength of a signal to diminish. Factors which influence the pathloss between a transmitter and a receiver include: transmitter antenna height, receiver antenna height, carrier frequency, clutter type (urban, sub-urban, rural), details of morphology such as height, density, separation, terrain type (hilly, flat). The pathloss L (dB) between a transmitter and a receiver can be modelled by:

$$L = b + 10n \log d \qquad \text{(A)}$$

Where d (metres) is the transmitter-receiver separation, b(db) and n are the pathloss parameters and the absolute pathloss is given by $l = 10^{(L/10)}$.

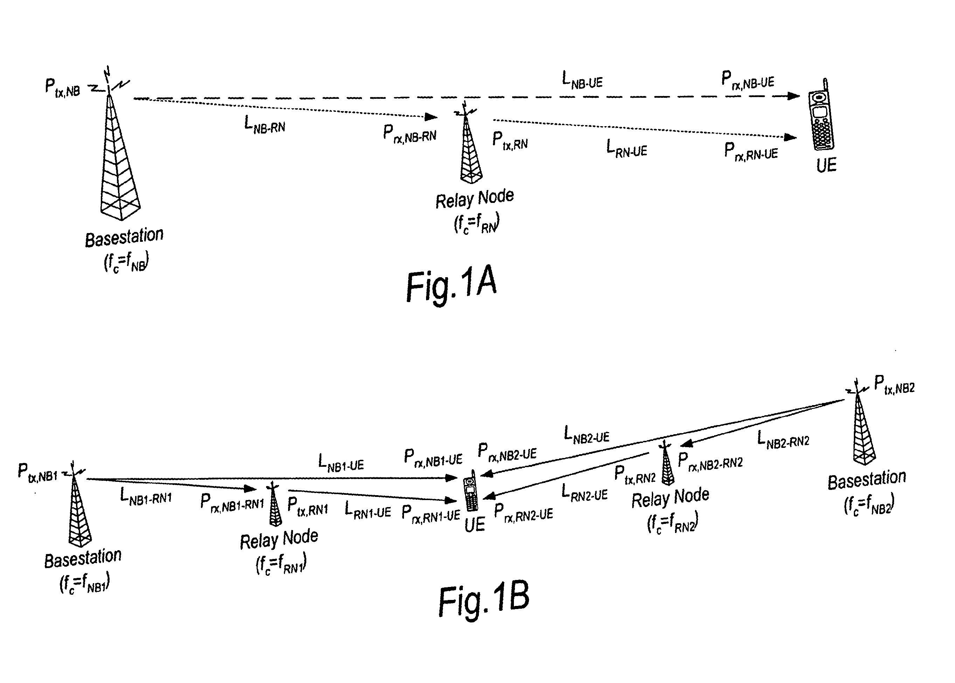

Figure 1A illustrates a single-cell two-hop wireless communication system comprising a base station (known in the context of 3G communication systems as "node-B" (NB)) a relay node (RN) and a user equipment (UE). In the case where signals are being transmitted on the downlink (DL) from a base station to a destination user equipment (UE) via the relay node (RN), the base station comprises the source apparatus (S) and the user equipment comprises the destination apparatus (D). In the case where communication signals are being transmitted on the uplink (UL) from user equipment (UE), via the relay node, to the base station, the user equipment comprises the source apparatus and the base station comprises the destination apparatus. The relay node is an example of an intermediate apparatus (I) and comprises: a receiver, operable to receive a signal from the source apparatus; and a transmitter, operable to transmit this signal, or a derivative thereof, to the destination apparatus.

Table I below gives some examples of the calculated pathloss of a signal being transmitted over the different links: source to destination (SD), source to intermediate (SI) and intermediate to destination (ID), in a multi-hop transmission system where b and n are assumed to remain the same over each of the links.

Table I

| b(dB) | n | Separation (metres) | | | Pathloss in dB | | | Absolute Pathloss | | |
|---|---|---|---|---|---|---|---|---|---|---|
| | | SD | SI | ID | SD | SI | ID | SD | SI | ID |
| 15.3 | 3.76 | 1000 | 500 | 500 | 128.1 | 116.8 | 116.8 | 6.46E12 | 4.77E11 | 4.77E11 |
| 15.3 | 3.76 | 1000 | 600 | 600 | 128.1 | 119.76 | 119.76 | 6.46E12 | 9.46E11 | 9.46E11 |
| 15.3 | 3.76 | 1000 | 700 | 700 | 128.1 | 122.28 | 122.28 | 6.46E12 | 1.69E12 | 1.69E12 |

The examples calculated above demonstrate that the sum of the absolute path losses experienced over the indirect link SI + ID may be less than the pathloss experienced over the direct link SD. In other words it is possible for:

$$\text{L(SI)} + \text{L(ID)} < \text{L(SD)} \qquad \text{(B)}$$

Splitting a single transmission link into two shorter transmission segments therefore exploits the non-linear relationship between pathloss verses distance. From a simple theoretical analysis of the pathloss using equation (A), it can be appreciated that a reduction in the overall pathloss (and therefore an improvement, or gain, in signal strength and thus data throughput) should be achieved if a signal is sent from a source apparatus to a destination apparatus via an intermediate apparatus (eg relay node), rather than being sent directly from the source apparatus to the destination apparatus. If implemented, multi-hop communication systems could potentially allow for a reduction in the transmit power of transmitters which facilitate wireless transmissions, which would lead to a reduction in interference levels as well as decreasing exposure to electromagnetic emissions.

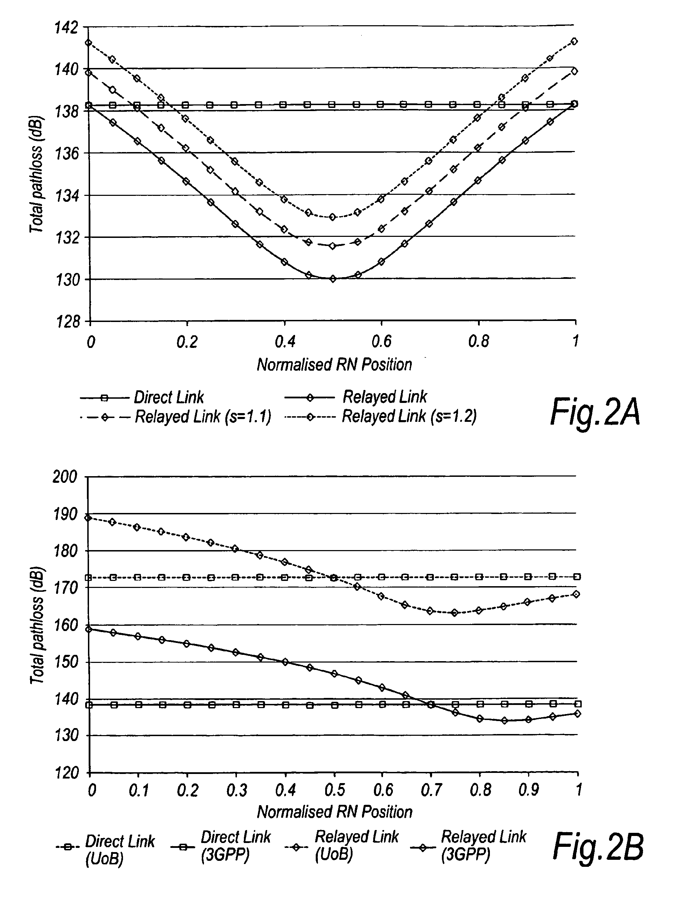

Clearly, due to the non-linear relationship between pathloss and distance, the position of an intermediate apparatus relative to the source and destination, will critically effect the potential gain that a multi-hop transmission may have as compared to a direct, or single-hop, transmission between the source and destination. This is illustrated in Figure 2A which shows a graphical representation of the theoretical gain which may be achieved by multi-hop transmissions, and plots the total power loss (dB) against the relative normalised position of the intermediate apparatus between the source apparatus and the destination apparatus.

Considering firstly the case where the intermediate node is positioned on the line of the direct link between the source and destination (in which case the path extension factor (s) = 1), it can be seen that the potential gain is reduced as the relay node is moved away from a mid-way position towards the source or destination apparatus. Likewise, as the position of the intermediate apparatus is moved away from the line of the direct link, thereby extending the total path length of the sum of the two transmission segments (and increasing the path extension factor to s=1.1, s=1.2 etc), it can be seen that the graphical region of theoretical gain is again reduced.

However, simulations carried out to test the applicability of multi-hop communication systems have revealed unexpectedly low gains in throughput of data. Indeed, the gains experienced are well below the potential gain suggested by a simple analysis based on the pathloss equation A. Consequently, and despite the potential advantages that multi-hop systems may demonstrate in terms of signal range extension, a possible reduction in the overall transmit power required to transmit a signal between a source and destination, and the connectivity of otherwise inaccessible nodes, wireless systems operators have been deterred from implementing multi-hop networks.

One of the reasons that such a discrepancy exists between the predicted gain and the simulated gain is that previous predictions have been based on the assumption that the pathloss parameters b and n are the same on all links. In actual fact, these values vary as a result of the antenna height of the source apparatus and destination apparatus as compared to the height of the relay node. Thus, a more realistic table of values is given below in table II. The values labelled 3GPP are obtained from adapting the model employed by the 3GPP to incorporate the fact that the antenna height of the intermediate apparatus is typically somewhere between the height of the antenna at the source and destination apparatus. The values labelled UoB are derived from modelling conducted by the University of Bristol based on a typical deployment in the city of Bristol.

**Table II**

| Pathloss Parameter | | Link | | |
| --- | --- | --- | --- | --- |
| | | S-D | S-I | I-D |
| 3GPP | b (dB) | 15.3 | 15.5 | 28 |
| | n | 3.76 | 3.68 | 4 |
| UoB | b(dB) | 13.07 | 16.29 | 10.04 |
| | n | 4.88 | 4.64 | 5.47 |

The graphical illustration of total pathloss verses normalised relay node position using the pathloss parameters tabulated in table II is shown in Figure 2B. It can be seen that the perfect "bell-shape" of Figure 2A is not achieved when a more realistic set of pathloss parameters are used to calculate the variation in total pathloss as the position of a theoretical relay node is adjusted. Indeed, the region of gain is reduced and it is apparent that relatively small changes in the position of a relay node or a user equipment, leading to a change in the absolute pathloss over the communication link, will have a significant effect on the quality of a communication signal at the receiving apparatus. Thus, the positioning of an intermediate apparatus or relay node is critical if a gain is to be achieved by the occurrence of a multi-hop transmission, as compared to a direct transmission between the source and destination.

However, even when predictions are based on a more accurate reflection of the pathloss parameters likely to be encountered in the real world, simulations of multi-hop systems have revealed unexpectedly poor correspondence between the predicted and simulated gain.

US 2005/063356 A1 describes a method of power adaption in a multi-hop communication system. A two-hop communication system is also described in WO 2004/107693 in which the forwarding response of the relay station is adapted in dependence upon the radio channel characters of the first and/or second link.

Embodiments of the present invention seek to provide a communication system comprising a source apparatus, a destination apparatus and at least one intermediate apparatus, wherein the source apparatus and the or each intermediate apparatus each comprise a transmitter, operable to transmit a communication signal or a signal derived therefrom, in a communication direction towards said destination apparatus, and wherein the destination apparatus and the, or each, intermediate apparatus each comprise a receiver, operable to receive said communication signal, or a signal derived therefrom, wherein said communication system comprises a determining means, operable to determine a measure of, or a change in a measure of, the resource allocated to one or more of said transmitters that will tend to substantially attain or maintain a balance between:

i) a measure of the quality of the communication signal received at the destination apparatus; and

ii) measure of the quality of the communication signal received at the, or each, intermediate apparatus.

It will, of course, be appreciated that the communication signal actually received by the destination apparatus may be the communication signal transmitted by the source apparatus, or it may be a communication signal derived therefrom.

Thus, preferred embodiments of the present invention seek to maintain or achieve a "balance" in a measure of the quality of a communication signal being received at the or each intermediate apparatus and a measure of the quality of a communication signal being received at a destination apparatus. Preferably, the determining means is operable to determine a change in the transmit power of one or more of the apparatuses which are operable to transmit a communication signal present communication system embodying the present invention, in order to reduce or prevent substantial imbalance (i.e. achieve or maintain a substantial "balance") between a measure of the quality of a communication signal received at the intermediate apparatus and a measure of the quality of a communication signal received at the destination apparatus.

The existence of an imbalance arising in a communication system embodying the present invention may be apparent from a direct comparison of a measure of a quality of a communication signal received at the destination apparatus and a measure of the quality of a communication signal received at the, or one of the, intermediate apparatuses. Alternatively, an imbalance may be apparent when a comparison is made via a mapping function. Hence the situation may exist where measures of equal value do not equate to a balanced system, and likewise where measures of differing value may equate to a balanced system.

It is envisaged that embodiments of the present invention may be used, prior to deployment of a multi-hop system, to optimise the system and/or to substantially balance a measure of the quality of a communication signal received at the, or each intermediate apparatus and a measure of the quality of a communication signal received at the destination apparatus. It is also envisaged that embodiments of the present invention may be implemented within an existing multi-hop system in order to seek to achieve and maintain "balance" in a measure of the quality of a communication signal across all links. Thus, the present invention may be employed within a multi-hop communication system to establish a substantial "balance" between an indicator of the RSS or the SINR at the destination apparatus and an indicator of the RSS or the SINR, at the, or each, intermediate apparatus. The transmit powers will advantageously be optimised initially with respect to a target received signal quality for one of the apparatuses operable to receive a communication signal in a multi-hop system. This will usually be the destination apparatus. Thus, an indicator of a measure of the variation of the quality of a communication signal received at the destination from a target received signal quality (= "variation from target" indicator), will advantageously be minimal when a system has been optimised according to embodiments of the present invention. Thereafter, if a change is detected in the variation from target indicator, which may be in a positive or negative sense, e.g. If the quality of the communication signal has deteriorated or improved, or if the target set for the apparatus has changed, the variation from target indicator will increase. In this case, embodiments of the present invention which enable a deviation of the variation from target indicator from a desired value to be detected, will advantageously seek to bring the variation from target indicator to the desired value.

Simulations of multi-hop communication systems embodying the present invention have been found to demonstrate a significant gain over systems in which a signal is transmitted directly to a destination apparatus. Indeed, the results of system level simulations carried out to test a preferred embodiment of the present invention indicate that a communication system which is "balanced" within the context of the present invention, can be expected to fulfil the advantages associated with multi-hop transmissions and to provide an improvement in the throughput of data.

It is believed that one explanation for the improved throughput demonstrated by preferred embodiments of the present invention is that they permit a reduction in the absolute transmit power required in a multi-hop system. This is considered in more detail below.

Starting from the principle already demonstrated above, that by splitting a single direct transmission link into two shorter transmission links, a reduction in the total pathloss experienced by a signal is achieved. Then, the total transmit power required to transmit a communication signal from a source apparatus to a destination apparatus via at least one intermediate apparatus, will be less than is required to transmit the communication signal directly between the source apparatus and the destination apparatus. Thus, less transmit power is needed in order to ensure that the destination apparatus (and possibly also the intermediate apparatus) receives a minimum or "target" signal quality. If no adjustment is made to the transmit power, then significant excess transmit power (i.e. transmit power exceeding that required to achieve a good, or target, signal quality at the destination apparatus and/or the intermediate apparatus) will result. Rather than serving to further increase the gain achieved by a multi-hop communication as compared to a direct communication between a source apparatus and a destination apparatus, this excess transmit power will merely increase interference levels leading to a deterioration in the quality of the communication link. This deterioration will tend to counteract the potential gain of a multi-hop system which accounts for the poor simulation results of previously considered multi-hop communication systems.

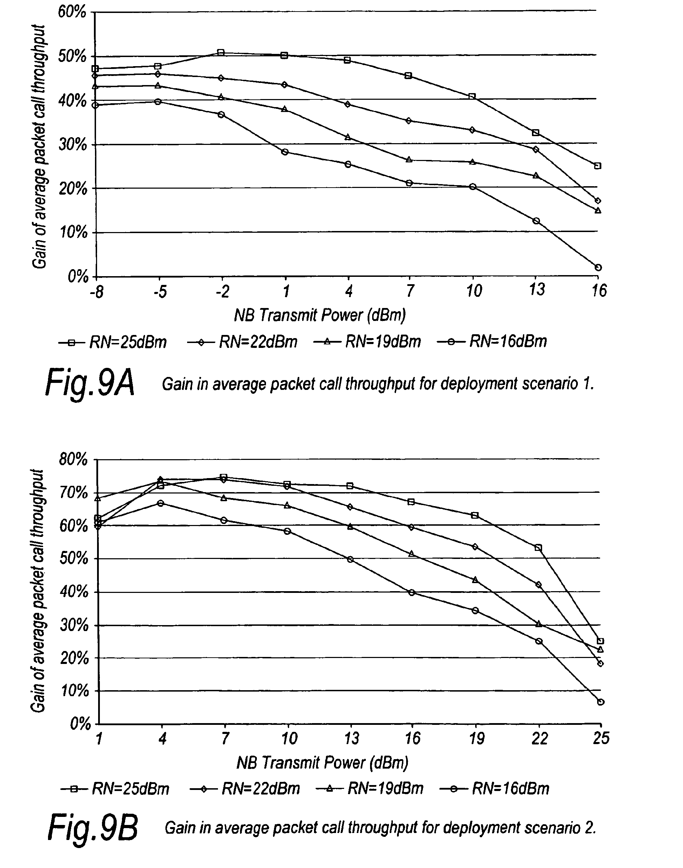

Furthermore, the overall throughput across a two-hop network (for example) is limited by the lower of: the number of data packets received at the intermediate apparatus and the number of data packets received at the destination apparatus. The number of data packets received at a receiver is dependent upon the quality of the communication link that terminates at that receiver. This may be reflected, for example, by a measure of the throughput, a measure of the received signal strength (RSS) or a measure of the signal-to-interference plus noise ratio (SINR). Thus, in effect, the receiver which receives the lowest quality communication signal within a multi-hop system forms a "bottle neck" for data packet transmission, thereby wasting capacity for data transfer on other links within the multi-hop system. An increase the transmit power at a transmitter which does not serve to improve the lowest quality communication signal, will result in additional excess transmit power. Consequently, a further degradation is experienced in the performance of the system. This is illustrated in Figure 9A and 9B which plot the variation of the gain in average packet throughput observed by users of a two-hop system compared to that observed for a single hop system, against the transmit power of the source apparatus (NB). Each graph includes four different plots, each representing a different transmit power of the intermediate apparatus. It can be seen that as the transmit power of the base station is increased beyond an optimal point, then a significant degradation in gain will be experienced despite the emission of more signal energy.

It can therefore be appreciated that the improvements made by preferred embodiments of the present invention can be attributed to the way in which the various aspects of the present invention seek to ensure that any imbalance between a measure of the quality of a communication signal received at the destination apparatus and a measure of the quality of a communication signal received at the, or each, intermediate apparatus is reduced or prevented. Thus, excess transmit power which cannot improve the throughput of data packets and which will only serve to raise interference levels, is minimised.

There are a number of different events which, if they arise, can potentially lead to an "imbalance" (i.e. a difference between a measure of the quality of a communication signal received at the destination apparatus and a measure of the quality of a communication signal received at the or each intermediate apparatus) in a multi-hop system:

    i) The pathloss arising over one of the links changes. This may be due to the position of one or both of the transmitter and receiver for that link changing, or due to a change in the environmental conditions or interference levels arising between the transmitter and the receiver.

    ii) It is usual for an apparatus which is operable to receive a communication signal, to have a target RSS or target SINR. This is usually set by the network provider and may vary depending on the characteristics of the communication system or receiving apparatus, or depending on the type of data to be transmitted. The target RSS/SINR of a mobile phone or other user equipment may vary and any change in target can be accommodated for by adjusting the transmit power of the transmitting apparatus in such a way as to tend to minimise a measure of the variation of the quality of a communication signal received at the destination apparatus from a target received signal quality (i.e. "variation from target"). In the case of a multi-hop system, merely adjusting the transmit power of one apparatus in order to accommodate a change in target of one of the receiving apparatuses, will lead to an imbalance within the system.

Embodiments of the present invention seek to provide a way of responding to an imbalance, or a potential imbalance, which arises as a result of each of these possible events in order to improve the throughput of data being transmitted on the downlink (DL) from a base-station (source) to a destination user equipment via one or more intermediate apparatuses. In a standard communications system the downlink is the link between the NB and the UE. In the multi-hop case the DL refers to the link in which communication is directed towards the UE (e.g. RN to UE, RN to RN in the direction of UE and NB to RN). Furthermore, embodiments of the present invention seek to provide a way of optimising a multi-hop system whereby any target quality set by receivers is substantially attained and the throughput of data across each link is substantially equal.

According to a first aspect of the present invention there is provided a communication system comprising a base station, a destination apparatus and at least one intermediate apparatus, the base station being operable to transmit a communication signal, via the or each intermediate apparatus, to the destination apparatus, wherein the destination apparatus comprises indicator derivation means operable to derive one or more indicators of the quality of a communication signal received at the destination apparatus, the system comprising:

    i) indicator deviation detection means, operable to detect a deviation in the, or one of the, indicators derived by the destination apparatus from a desired value;

    ii) control means, provided in the base station, comprising a first calculation means operable, following detection of such a deviation, to calculate a new transmit power for the intermediate apparatus, or a new transmit power for the intermediate apparatus and the base station, that will tend to a) reduce an imbalance between a measure of a quality of a communication signal received at the intermediate apparatus and a measure of the quality of a communication signal received at the destination apparatus; or b) prevent said imbalance from arising.

Embodiments of the first aspect of the present invention advantageously provide a way of restoring any deviation in an indicator derived by the destination apparatus to a desired value by i) responding to an imbalance which arises due to a change in pathloss between the intermediate apparatus and the destination apparatus by calculating a new transmit power for the intermediate apparatus; or ii) responding to a potential imbalance which could result following a change in the target of the destination apparatus by calculating a new transmit power for the intermediate apparatus and the source apparatus.

In accordance with an embodiment of the first aspect of the present invention, one of the indicators derived by said destination apparatus may comprises a measure of the strength of a communication signal received at the destination apparatus (eg RSS). Alternatively or additionally, one of the indicators derived by the destination apparatus may comprise a measure of the signal-to-interference plus noise ratio (SINR) of a communication signal received at the destination apparatus, or it may comprise a measure of the variation of the quality of a communication signal received at the destination apparatus from a target received signal quality set for the destination apparatus. An indicator of the variation from target may be a variation from target RSS, a variation from target SINR or a variation from a target which is based on a combination of RSS and SINR.

Preferably, the imbalance which embodiments of the first aspect of the present invention seeks to reduce or prevent comprises a difference between a measure of the signal-to-interference plus noise ratio of a communication signal received at the destination apparatus and a measure of the signal-to interference plus noise ratio of a communication signal received at the, or one of the, intermediate apparatuses.

According to a second aspect of the present invention there is provided a communication system comprising a base station, a destination apparatus and at least one intermediate apparatus, the base station being operable to transmit a communication signal, via the or each intermediate apparatus, to the destination apparatus, said base station comprising a control means, wherein each of the destination apparatus and the intermediate apparatus comprise: indicator derivation means operable to derive one or more indicators of the quality of a communication signal received at the destination apparatus or the intermediate apparatus respectively, wherein said intermediate apparatus and said destination apparatus are operable to transmit said indicators to said control means, the control means comprising:

> i) imbalance detection means operable to detect an imbalance between one said indicator derived by destination apparatus and one said indicator derived by the intermediate apparatus; and
> ii) calculation means operable, following detection of such an imbalance, to calculate a new transmit power for the base station which will tend to reduce said imbalance.

Embodiments of the second aspect of the present invention advantageously provide a way of adjusting the transmit power of the base station in order to tend to achieve or maintain balance between the quality of a communication signal received at the destination apparatus and the quality of a communication signal received at the intermediate apparatus. In particular, embodiments of the second aspect of the present invention advantageously provide a means for responding to an imbalance which arises due to a change in pathloss between the base station and the intermediate apparatus.

According to embodiments of the second aspect of the present invention, one said indicator derived by each of the intermediate apparatus and the destination apparatus comprises a measure of the strength of a communication signal received at the destination apparatus or the intermediate apparatus respectively (eg RSS). Alternatively or additionally, one said indicator derived by each of said intermediate apparatus and said destination apparatus comprises a measure of the signal-to-interference plus noise ratio (SINR) of a communication signal received at the destination apparatus or the intermediate apparatus respectively.

Preferably, said imbalance detection means comprises a pathloss updating means operable, following receipt of said indicators from said destination apparatus and said intermediate apparatus, or following a change in one or both of said indicators received by said control means, to determine a measure of the pathloss experienced by a communication signal being transmitted between the base station and the intermediate apparatus, and between the intermediate apparatus and the destination apparatus. A measure of the pathloss experienced by a communication signal being transmitted between the base station and the intermediate apparatus may preferably be determined from a measure of the transmit power of the base station when that communication signal was transmitted. A measure of the pathloss experienced by a communication signal being transmitted between the intermediate apparatus and the destination apparatus may preferably be obtained from a measure of the transmit power of the intermediate apparatus when that communication signal was transmitted. The intermediate apparatus may be operable to transmit a transmit power indicator which is indicative of a measure of a current transmit power of the intermediate apparatus to the pathloss updating means for use determining the pathloss between the intermediate apparatus and the destination apparatus. Alternatively, the measure of the transmit power of the intermediate apparatus may be determined from i) a measure of the transmit power of the intermediate apparatus at an initial time and ii) knowledge of changes in the transmit power of the intermediate apparatus which have occurred since said initial time.

The intermediate apparatus preferably comprises a receiver operable to receive the signal transmitted by the source apparatus; and a transmitter operable to transmit the received signal, or a signal derived therefrom, to the destination apparatus. Duplexing of signals to separate communication signals received by the intermediate apparatus from communication signals transmitted by the intermediate apparatus may be Frequency Division Duplex (FDD) or Time Division Duplex (TDD). One or more of the intermediate apparatuses may preferably comprise a so-called relay node (RN) or relay-station (RS). A relay node has the capability of receiving a signal for which it is not the intended final destination and then transmitting the signal on to another node such that it progress towards the intended destination. A relay node may be of the regenerative type, where the received signal is decoded to the bit level, making a hard decision. If the received packet is found to be in error then retransmission is requested, hence the RN incorporates ARQ or H-ARQ. ARQ or H-ARQ is a receiver technique for managing retransmission request and subsequent reception of retransmitted signals. Once the packet is successfully received, it is then scheduled for retransmission towards the destination, based on any radio resource management strategies incorporated into the RN. Alternatively a relay node may be of the non-regenerative type, whereby data is amplified at the relay node and the signal is forwarded to the next station. It is envisaged that the function of an intermediate apparatus or relay node may be provided by a mobile phone, or other user equipment.

Preferably, the control means is operable, following a calculation of a new transmit power for the intermediate apparatus by the first calculation means, to determine if the new transmit power of the intermediate apparatus is greater than a maximum transmit power of the intermediate apparatus. This is determined with reference to the maximum transmit power of the intermediate apparatus. Preferably, if it is determined by the control means that the new transmit power is greater than the maximum transmit power, the first calculation means calculates a second new transmit power for the intermediate apparatus which does not exceed the maximum transmit power of the intermediate apparatus.

Furthermore, in the case where the control means receives a request for a change in the transmit power of the intermediate apparatus, the control means may preferably be operable to receive an input signal which allows the control means to determine if the request is due to a change in a variation from target indicator derived by the destination apparatus which arises due to a change in the target quality indicator set for the destination apparatus. If it is determined that the request is due to a change in the variation from target indicator derived by the destination apparatus, the first calculation means is further operable to calculate a new transmit power for the base station, based on the new transmit power calculated for the intermediate apparatus, to thereby tend prevent an imbalance between a measure of the quality of a communication signal received at the intermediate apparatus and a measure of the quality of a communication signal received at the destination apparatus from arising. Following a calculation of a new transmit power for the base station, the control means is preferably operable to determine if said new transmit power for the base station is greater than a maximum transmit power for the base station. If it is determined by the control means that the new transmit power is greater than the maximum transmit power of the base station, the first calculation means calculates a second new transmit power for the base station which does not exceed said maximum. The first calculation means is advantageously operable, following the calculation of a second new transmit power for the base station, to calculate a second new transmit power for the intermediate apparatus which will tend to prevent an imbalance between a measure of the quality of a communication signal received at the destination apparatus and a measure of the quality of a communication signal received at the intermediate apparatus from arising.

It should be appreciated that embodiments of the first aspect of the present invention, which seek to detect a deviation in an indicator derived by the destination apparatus from a desired value, may or may not seek to balance, or prevent an imbalance, between that indicator and an indicator of the same type derived by the intermediate apparatus. Furthermore, in the case where a deviation in an indicator of the variation from target SINR set by the destination apparatus is detected as a result of the target SINR changing (whilst the SINR at the destination remains constant), no imbalance will exist between the indicators of SINR derived by the designation apparatus and the intermediate apparatus (assuming the system was in balance prior to the change in target at the destination apparatus), and the control means will be operable to calculate the adjustment required in the transmit power of both the intermediate apparatus and the source apparatus which will tend to prevent an imbalance in SINR from arising.

The first and second aspects of the present invention will each tend to reduce or prevent an imbalance which arises or may arise, as the case may be, under different circumstances. The most likely event to occur in a structured multi-hop system (i.e. one in which the or each intermediate apparatus is fixed) is that the pathloss between the intermediate apparatus and the destination apparatus changes (which may be due to a change in the position of the destination apparatus or a change in environmental conditions) or that the target of the destination apparatus changes. Both of these events are advantageously dealt with by the first aspect of the present invention which is triggered by detection of a change in the indicator derived by the destination apparatus. Preferably, a communication system embodying the first aspect of the present invention will comprise an indicator deviation detection means which monitors the, or one of the, indicators of the destination apparatus at all times. Thus, any change or deviation in the indicator derived by the destination apparatus from a desired value, can be detected quickly.

In many instances, the first aspect alone may be sufficient to maintain a balance across the multi-hop system.

However, as discussed above, if the pathloss between the base station and the intermediate apparatus changes (which may be due to a change in the position of the intermediate apparatus in an ad-hoc network, or due to a change in the environmental conditions arising across that link), this must be dealt with by embodiments of the second aspect of the present invention. Thus, it is preferable to provide a communication system which embodies both the first and second aspect of the present invention. In this case, the imbalance detection of the second aspect of the present invention is performed periodically. Thus, according to a preferred embodiment of the first aspect of the present invention, the intermediate apparatus comprises indicator derivation means operable to derive one or more indicators of the quality of a communication signal received at the intermediate apparatus, wherein said intermediate apparatus and said destination apparatus are each operable to transmit one said indicator derived thereby to said control means, the control means further comprising:

> i) imbalance detection means operable to detect an imbalance between one said indicator derived by the destination apparatus and one said indicator derived by the intermediate apparatus; and
> ii) second calculation means operable, following detection of such an imbalance, to calculate a new transmit power for the base station which will tend to reduce said imbalance.

The situation may arise where a change in the target of the destination apparatus is accommodated by a substantially simultaneous change in the path loss between the intermediate apparatus and the destination apparatus. Thus, in the case where the indicator deviation detection means of the first aspect of the present invention is provided in the destination apparatus such that the destination apparatus is operable to transmit a request to the control means for a change in the transmit power of the intermediate apparatus, no request for a change in transmit power of the intermediate apparatus will be generated by the destination apparatus if this situation does arise. This will lead to an imbalance in the system which will go un-corrected by the first aspect of the present invention, since the new target of the destination apparatus will have been met (inadvertently) but no corresponding change will have been made to the transmit power of the source apparatus. This, relatively rare, situation can be handled by a communication system which embodies both the first and second aspect of the present invention since the change in the measure of the path loss experienced between the intermediate apparatus and the destination apparatus will be detected by the path loss updating means. The second calculation means is then operable to calculate the change in the transmit power of the base station that is required to in order to tend to balance a measure of the quality of a communication signal received at the intermediate apparatus and a measure of the quality of a communication signal received at the destination apparatus.

According to a further aspect of the present invention there is provided a method of controlling the transmit power of one or more apparatus operable to transmit a communication signal in a multi-hop communication system, the communication system comprising a base station, a destination apparatus and at least one intermediate apparatus, the base station being operable to transmit a communication signal, via the or each intermediate apparatus, to the destination apparatus, the method comprising the steps of:

> i) deriving, at the destination apparatus, one or more indicators of a quality of a communication signal received at the destination apparatus;
> ii) detecting a deviation in the, or one of the, indicators derived by the destination apparatus from a desired value;
> iii) calculating, following the detection of such a change, a new transmit power for the intermediate apparatus, or a new transmit power for the intermediate apparatus and the base station, which will tend to: a) reduce an imbalance between a measure of a quality of a communication signal received at the intermediate apparatus and a measure of the quality of a communication signal received at the destination apparatus; or b) prevent said imbalance from arising.

According to a further aspect of the present invention there is provided a method of controlling the transmit power of one or more apparatus which is operable to transmit a communication signal in a multi-hop communication system, the communication system comprising a base station, a destination apparatus and at least one intermediate apparatus, the base station being operable to transmit a communication signal, via the or each intermediate apparatus, to the destination apparatus, the method comprising the steps of:

> i) deriving, at each of the destination apparatus and the intermediate apparatus, an indicator of the quality of communication signal received at the destination apparatus, or at the intermediate apparatus, respectively;
> ii) detecting an imbalance between one said indicator derived by the destination apparatus and one said indicator derived by the intermediate apparatus; and
> iii) calculating, following the detection of such an imbalance, a new transmit power for the base station, which will tend to reduce said imbalance.

According to a further aspect of the present invention there is provided a base station operable to transmit a communication signal to a destination apparatus, via at least one intermediate apparatus, the base station comprising:

   i) receiving means, operable to receive an indicator from a destination apparatus and indicator deviation detection means, operable to detect a deviation in one said indicator from a desired value, the indicator being indicative of the quality of a communication signal received at the destination apparatus; or

   i) receiving means, operable to receive a request for a new transmit power for the intermediate apparatus from the destination means; and
   ii) control means having a first calculation means operable, following detection of a change in one said indicator received from said destination apparatus, or following receipt of a request from said destination apparatus, as the case may be, to calculate a new transmit power for the intermediate apparatus, or a new transmit power for the intermediate apparatus and the base station, which will tend to: a) reduce an imbalance between a measure of the quality of a communication signal received at the intermediate apparatus and a measure of a quality of a communication signal received at the destination apparatus; or b) prevent said imbalance from arising.

Preferably, the receiving means of the base station is further operable to receive an indicator from the destination apparatus, the indicator being indicative of a quality of a communication signal received at the destination apparatus, the base station further comprising:

   i) imbalance detection means operable to detect an imbalance between one said indicator received from the destination apparatus and one said indicator received from said intermediate apparatus; the control means further comprising second calculation means operable, following detection of such an imbalance, to calculate a new transmit power for the base station which will tend to reduce said imbalance.

According to a further aspect of the present invention there is provided a base station operable to transmit a communication signal to a destination apparatus, via at least one intermediate apparatus, the base station being provided with a control means comprising:

   i) receiving means, operable to receive one or more indicators from each of the destination apparatus and the intermediate apparatus, the, or each, indicator being indicative of a quality of a communication signal received at the destination apparatus or the intermediate apparatus respectively;
   ii) imbalance detection means operable to detect an imbalance between one said indicator received from the destination apparatus and one said indicator received from the intermediate apparatus; and
   iii) calculation means operable, following detection of such an imbalance, to calculate a new transmit power for the base station which will tend to reduce said imbalance.

Communication methods carried out in a base station embodying the present invention; an intermediate apparatus embodying the present invention or in a destination apparatus embodying the present invention are also provided.

Embodiments of the present invention are advantageous in that either regenerative or non-regenerative relays may be used. Furthermore, embodiments of the present invention advantageously enable centralised control of the setting of the transmit power to be maintained, with minimal processing required in the relay station. This is beneficial to the operator of the wireless system as it keep control located within a central entity making management of the network much simpler. Further, should the relay start to malfunction, then due to the fact that control is located in the base station (or Node - B) then corrective measures are possible by the operator. Moreover, the fact that processing in the intermediate apparatus is kept to a minimum is advantageous in terms of reducing power consumption and thus maximising battery life, should the intermediate apparatus be a mobile or remote device.

The desired value may be the value of the indicator of the quality of a communication signal derived by the destination apparatus which is at, or close to, the target value set by the destination apparatus, and when the system is substantially balanced (i.e. a measure of a quality of a communication signal received at the destination apparatus is in balance with a measure of a quality of communication signal received at the , or each, intermediate apparatus). Thus, embodiments of the first aspect of the present invention may be advantageously used to maintain the quality of the communication signal received by the destination apparatus at, or near, the target value set by the destination apparatus. Thereafter, it may be necessary for embodiments of a second aspect of the present invention to optimise the systems ensuring a balance is achieved between the destination apparatus and the or each intermediate apparatus.

Thus, it should be appreciated that the indication deviation detection means may be used in a system which has already been balanced, or optimised. Thus, a deviation from the desired value, which may arise due to an event which results in a change in a measure of a quality of a communication signal at the destination apparatus will be detected, and the required change the resource allocated to the previous intermediate apparatus determined.

The required change in resource allocation will be calculated by the first calculation means. If the change in indicator is due to a change in target, the first calculation means will also be operable to calculate the new transmit power for the source apparatus that will tend to prevent an imbalance, due to a new target quality at the destination apparatus being satisfied, from arising. If the target has not changed, but the pathloss has changed such that the quality of the communication signal has altered, the calculation means only need calculate a new transmit power for the intermediate apparatus in order for a balance to be maintained. Changes in pathloss between the source apparatus and the intermediate apparatus, which lead to a change in the RSS/SINR at the intermediate apparatus, must be dealt with by systems/methods which embody the second aspect of the present invention, or which embody both the first and second aspects of the present invention.

Alternatively, it is envisaged that embodiments of the present invention may be used to optimise a multi-hop communication system. Thus, embodiments of the first aspect will advantageously allow the target set by the destination apparatus to be attained. Thereafter, embodiments of the second aspect may be used to optimise the multi-hop system.

Embodiments of the present invention may be implemented within a wireless communication system employing any multiple access technique, including but not limited to: frequency division multiple access (FDMA), time division multiple access (TDMA) code division multiple access (CDMA) and orthogonal frequency division multiple access (OFDMA). In the case of a CDMA system, in which all transmissions occur in the same frequency band and each transmission is assigned a unique channelisation code, the Gp factor represents the spreading factor or length of the code used to spread the transmitted signal otherwise known as the processing gain. In the case of orthogonal spreading codes, up to Gp channels are available for simultaneous transmission.

The actual calculation to be performed by the first and second calculation means may be derived in a number of possible ways. One derivation, which is based on a consideration of the SINR at each of the receiving elements in a multi-hop network, is given below and leads to a number of possible solutions for calculating the optimal transmit power of the transmitting elements comprised in a multi-hop network for various deployment scenarios. The skilled person will appreciate that alternative solutions may be derived from consideration of other types of measures of the quality of a communication signal at the receivers of a multi-hop network and the underlying principal of the present invention that these measures should be balanced.

It will be proved later that different calculations may be performed by the calculation means depending on the duplexing method employed to separate transmissions between two links, and the characteristics of the intermediate apparatus employed in the present communication system. Furthermore, solutions may be based on a single cell model, a two cell model or a multi-cell model.

In the case where the intermediate apparatus comprises a regenerative relay node and an FDD duplexing method is employed to separate signals received by the relay node from those transmitted by the relay node, the transmit power of the base station can be advantageously found using equation (5) and the transmit power of the intermediate apparatus can be advantageously found using equation (6).

In the case where the intermediate apparatus comprises a regenerative relay node and a TDD duplexing method is employed to separate signals received by the relay node from those transmitted by the relay node, the transmit power of the base station can be advantageously found using equation (7) and the transmit power of the intermediate apparatus can be advantageously found using equation (8).

In the case where the intermediate apparatus comprises a non-regenerative relay node and an FDD duplexing method is employed to separate signals received by the relay node from those transmitted by the relay node, the transmit power of the base station can be advantageously found using equation (29) and the transmit power of the intermediate apparatus can be found using equation (31).

In the case where the apparatus comprises a non-regenerative relay node and a TDD duplexing method is employed to separate signals received by the relay node from those transmitted by the relay node, the transmit power of the base station can be advantageously found using equation (44) and the transmit power of the intermediate apparatus can be advantageously found using equation (47).

It should be appreciated that the term "user equipment" encompasses any device which is operable for use in a wireless communication system. Furthermore, although the present invention has been described primarily with reference to terminology employed in presently known technology, it is intended that the embodiments of the present invention may be advantageously applied in any wireless communication systems which facilitates the transmission of a communication signal between a source and destination, via an intermediate apparatus.

In any of the above aspects, the various features may be implemented in hardware, or as software modules running on one or more processors. The invention also provides computer programs and computer program products for carrying out any of the methods described herein, and computer readable media having stored thereon programs for carrying out any of the methods described herein. A computer program embodying the invention may be stored on a computer-readable medium, or it could, for example, be in the form of a signal such as a downloadable data signal provided from an Internet web site, or it could be in any other form.

For a better understanding of the present invention and to show how the same may be carried into effect, reference will now be made, by way of example, to the accompanying drawings in which:

Figure 1A illustrates a single cell/relay model of a wireless communication system;

Figure 1B illustrates a two cell/relay model of a wireless communication system;

Figures 2A and 2B each show a graphical representation of the theoretical gain that may be achieved by a multi-hop communication system based on pathloss equation (A);

Figure 3 illustrates an algorithm embodying the first aspect of the present invention;

Figure 4 illustrates an algorithm embodying the second aspect of the present invention;

Figure 5 illustrates parts of a communication system embodying the first aspect of the present invention;

Figure 6 illustrates the relationship between source transmit power and intermediate transmit power in the case of a multi-hop communication system having a non-regenerative relay node and using an FDD duplexing technique;

Figure 7 illustrates the relationship between source transmit power and intermediate transmit power in the case of a multi-hop communication system having a non-regenerative relay node and using a TDD duplexing technique;

Figures 8A and 8B illustrate the optimal NB transmit power as a function of RN transmit power;

Figure 9 shows a graphical illustration of the variation in the average gain in throughput observed by users of a multi-hop system as compared to that observed for a single hop system; and

Figure 10 illustrate the optimal NB transmit power as a function of RN transmit power where it is assumed that the communication link between the source and destination apparatus has a 3dB gain compared with the shorter multi-hop links.

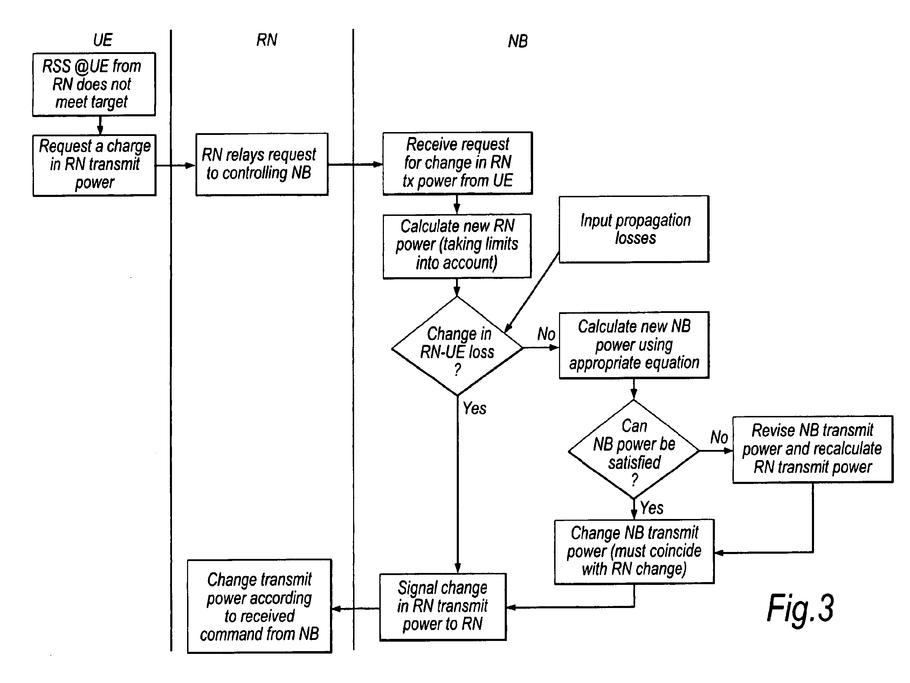

An example of an algorithm which implements an embodiment of the first aspect of the present invention will now be described with reference to Figure 3 in which the source apparatus comprises a node-B (NB), the intermediate apparatus comprises a relay node (RN) which may be of the regenerative or non-regenerative type, and the destination apparatus comprises a user equipment (UE). The user equipment continually monitors the RSS and derives indicators of the received signal strength and the variation from target received signal strength. The destination apparatus is provided with an indicator deviation detection means for detecting a change in one or both of these indicators. The Node-B is provided with a control means having a first calculation means according to an embodiment of the present invention.
The details of the algorithm are summarised as follows:
**Downlink Algorithm 1: Part 1**
**Trigger: NB receives request for change in RN transmit power from UE**

| Algorithm Input | Required by | Origin |
| --- | --- | --- |
| Request for change in RN Transmit Power | **NB** | Change derived in UE and signalled to NB via RN |
| RN Transmit Power | **NB** | Tracked/calculated in the NB |
| RN-UE Propagation Loss | **NB** | Calculated in the NB (see second part) |

| Algorithm Output | Derivation | Destination & Signalling Requirement |
| --- | --- | --- |
| New NB transmit power | Explicit calculation | Used by NB |
| New RN transmit power | Explicit calculation | Relative change in RN power signalled to RN |

In order to enable calculation of the new RN transmit power, the control means in the NB requires knowledge of the current RN transmit power. Two techniques for obtaining this information are available : 1) The NB has knowledge of the initial transmit power of the RN as well as the maximum; this knowledge is either inherent or signalled when the RN connects to the NB. The NB then tracks the RN transmit power as commands to change it are issued or 2) The RN reports the current transmit power to the NB preventing the need for tracking in the NB. This algorithm assumes the first technique is used since it benefits from lower signalling complexity.

The following sequence takes place following detection of a deviation an indicator from a desired value (which in this case is the target RSS) in order for a first calculation means provided in the NB to calculate a new transmit power for the intermediate apparatus which will tend to substantially reduce an imbalance between a measure of the quality of a communication signal received at the intermediate apparatus and a measure of the quality of a communication signal received at the destination apparatus; or a new transmit power for the intermediate apparatus and the base station which will substantiaiiy prevent said imbalance from arising.

1. The destination apparatus transmits a request for a change in the RN transmit power to the RN;

2. The RN propagates this request to the NB which comprises a first calculation means;

3. Based on a knowledge of the current RN transmit power, the first calculation means calculates the new RN transmit power required to satisfy the change requested by the UE. The NB takes into account the finite limit of the RN transmit power, adjusting the new transmit power as appropriate;

4. Then:

i) if it is detected that no change has occurred in the RN-UE propagation loss (as determined by an input signal derived by an embodiment of the second aspect of the present invention) then the request has been generated because of a change in the target at the UE, not a change in the RN-UE propagation loss. In this case the first calculation means also calculates a new transmit power for the NB. The NB then checks that the NB transmit power change can be satisfied (i.e. in the case of an increase the maximum transmit power is not exceeded). If the maximum is exceeded then the power change is adjusted so this will not occur. The RN transmit power is then recalculated so that balance will be attained. The NB then signals a command to the RN for the RN to adjust its transmit power in accordance with the new transmit power calculated by the first calculation means and changes its own transmit power so as to coincide with the RN transmit power change; or

ii) If it is detected that a change has occurred in the RN-UE propagation loss, the NB signals a command to the RN for the RN to adjust its transmit power in accordance with the new transmit power calculated by the first calculation means.

The algorithm described above will manage the case of the propagation loss varying between the RN and UE and the case of the UE modifying its target RSS or SINR. In order to handle the case of the propagation loss varying between the NB and RN and the case that both the target in the UE and the propagation loss between the RN and UE varies, such that no request for change in RN transmit power is generated, an algorithm which implements an embodiment of the second aspect of the present invention operates periodically as discussed below.

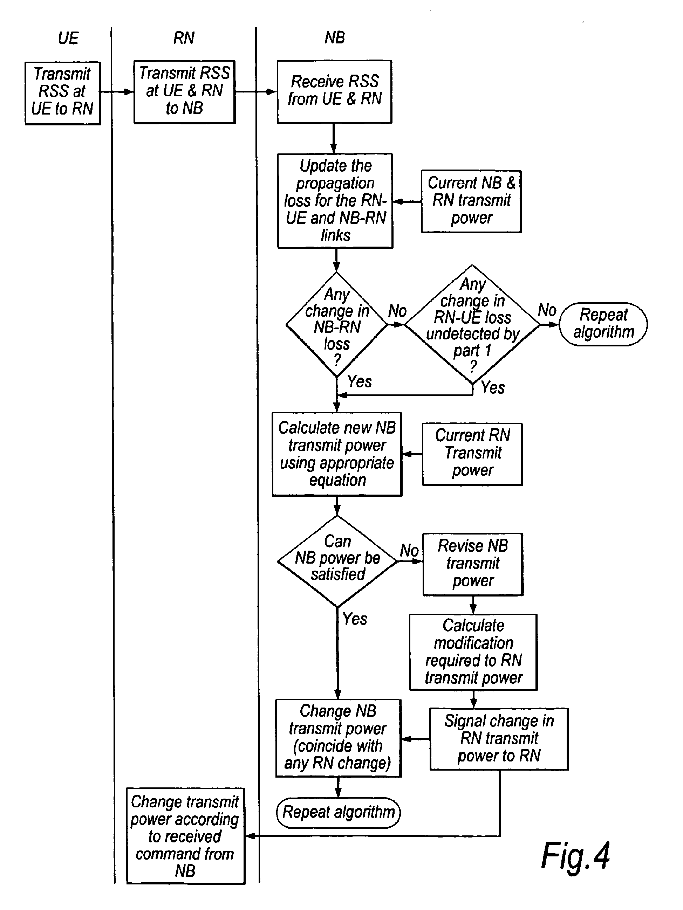

This algorithm is executed periodically in addition to the algorithm discussed above with reference to Figure 4. Alternatively, it is also possible for the algorithm described with reference to Figure 4, or the following algorithm to be implemented separately in a wireless multi-hop communication system.

**Downlink Algorithm 1: Part 2**
**Trigger: Periodically executed in NB**

| Algorithm Input | Required by | Origin |
| --- | --- | --- |
| RSS at UE | NB | Signalled from UE via RN |
| RSS at RN | NB | Signalled from RN |
| NB Transmit Power | NB | Known already |
| RN Transmit Power | NB | Tracked/calculated in the NB |

| Algorithm Output | Derivation | Destination & Signalling Requirement |
| --- | --- | --- |
| New NB transmit power | Explicit calculation | Used by NB |
| New RN transmit power | Explicit calculation | Relative change in RN power signalled to RN |
| Propagation losses | Explicit calculation | Derived from difference between Tx and Rx power. Used in NB. |

The algorithm assumes that indicators of the received signal strength at the UE and RN are reported to the NB in order to facilitate calculation of the propagation loss across the two links by the second calculation means. The NB is provided with a second calculation means according to an embodiment of the second aspect of the present invention.

1. The NB monitors the indicators of the received signal strength from both the UE and RN. Using this in conjunction with the knowledge of the RN and NB transmit power it updates the propagation loss for the NB-RN and RN-UE links;

2. If a change in either the NB-RN or RN-UE propagation loss is detected then the updated propagation loss is used by the second calculation means, in conjunction with the knowledge of the RN transmit power, to calculate the optimal NB transmit power. If no change in propagation loss is detected then the current iteration of the algorithm terminates;

3. If a change in propagation loss is detected, then:

i) if the calculated NB transmit power can be met (i.e. the maximum transmit power of the NB will not be exceeded) then NB signals a command to the RN for the RN to adjust its transmit power in accordance with the new transmit power calculated by the second calculation means, or
ii) if the calculated NB transmit power can not be met then the NB transmit power is modified to one that can. The second calculation means then calculates the new RN transmit power that ensures optimal balance. The NB then signals a command to the RN for the RN to adjust its transmit power in accordance with the new transmit power calculated by the second calculation means and changes its own transmit power so as to coincide with the RN transmit power change.

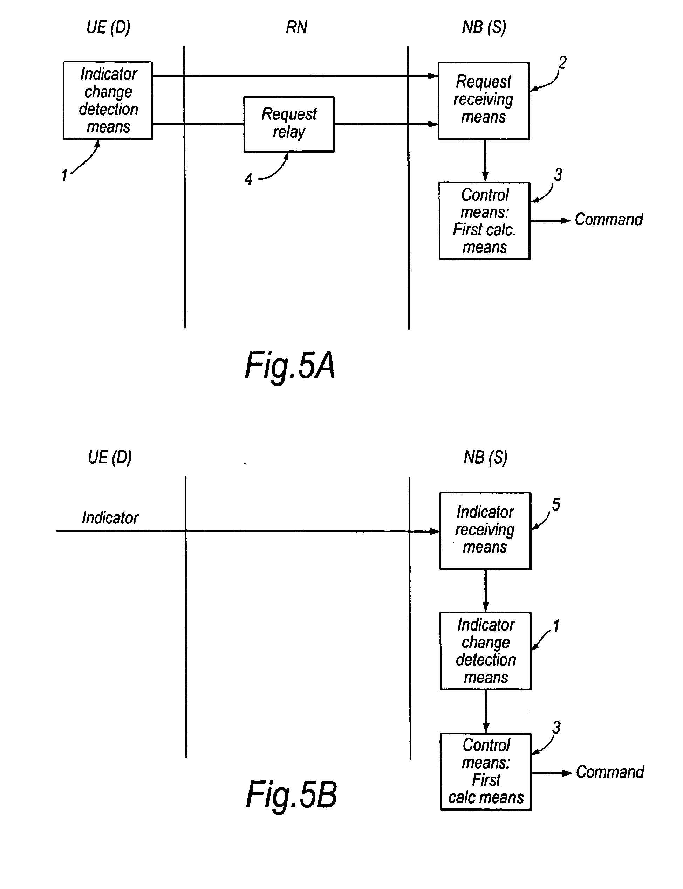

There are a number of ways in which the signalling required to carry out embodiments of the first aspect of the present invention may be implemented and these are illustrated in Figures 5A and B which show parts of a communication system embodying the first aspect of the present invention in which the same reference numerals are used to refer to parts which provide the same function.

Figure 5A shows a communication system in which, in addition to an indicator derivation means (not shown), the destination apparatus is provided with an indicator deviation detection means (1) and is operable, following detection of a change in the indicator derived by the destination apparatus, to transmit a request for a determination of a change in the transmit power of the intermediate apparatus. The base station (NB) comprises a request receiving means (2) and a control means (3) which comprises the first calculation means. The request transmitted by the destination apparatus may be transmitted via a request relay means (4) provided in the intermediate apparatus.

Figure 5B shows a communication system in which the base station (NB) comprises an indicator receiving means (5), an indicator deviation detection means (1), and a control means (3) which comprises a first calculation means.

Theoretical Analysis

The following theoretical analysis derives possible solutions for calculating the optimal transmit power of the transmitting elements comprised in a multi-hop network for various deployment scenarios. For each deployment scenario, theoretical solutions are obtained assuming a single-cell model and a two-cell model. In the case of a two cell model, it is assumed that the deployment in both cells is identical and that the transmit powers on the base station (BS) and the intermediate apparatus (I) are the same. It is also assumed that where appropriate $P_{tx\_tot,RN} = G_p P_{tx,RN}$ and $P_{tx\_tot,NB} = G_p P_{tx,NB}$ and that for the case of TDD both RN's transmit at the same time. This in effect generates the worse case scenario for two cells.

Theoretical solutions may be evolved from a consideration of the signal-to-interference plus noise ratio (SINR) experienced by the receiving nodes in a multi-hop system (i.e. the or each intermediate apparatus (I) and the destination apparatus (D)). The SINR at a particular node is a measure of the quality of a communication signal received by that node and is a ratio of the received strength of the desired signal to the received signal strength of the undesired signals (noise and interference).

As previously discussed, the considerations required for noise and interference depend on the duplexing method used to separate signal received at an intermediate apparatus from those transmitted from an intermediate apparatus, the characteristics of the intermediate apparatus and also the level of inter-cell interference which is taken into account (i.e. interference from neighbouring cells).

The following equation represents the SINR of a communication signal sent from an intermediate apparatus to a destination apparatus for all scenarios, where different terms may be ignored depending upon the type of intermediate apparatus (e.g. non-regenerative or regenerative) and the duplexing method:

$$SINR_{RN-UE} = \frac{G_p P_{tx,RN}}{L_{RN-UE}\left(N + \frac{P_{tx,RN}}{L_{RN-UE}\,SINR_{NB-RN}} + \frac{P_{tx\_tot,NB}}{L_{NB-UE}}\right)}$$

For the case of FDD instead of TDD then the third term in the bracket is removed and for the case of regenerative instead of non-regenerative the second term in the bracket is removed.

In the case of a two-cell model as illustrated in Figure 1B, this becomes:

$$SINR_{RN-UE} = \frac{G_p P_{tx,RN1}}{L_{RN1-UE}\left(N + \frac{P_{tx,RN1}}{L_{RN1-UE}\,SINR_{NB1-RN1}} + \frac{P_{tx\_tot,NB1}}{L_{NB1-UE}} + \frac{P_{tx\_tot,NB2}}{L_{NB2-UE}} + \frac{P_{tx\_tot,RN2}}{L_{RN2-UE}}\right)}$$

The first three terms in the bracket in (2) are the same as those in (1). The additional last two terms originate from the interference experienced from the neighbouring co-channel NB and RN respectively. Obviously if the neighbouring cell employs a different frequency or uses a different timeslot for relay transmission then the terms needed to model this interference will vary. It should be appreciated that these equations can be extended to a three-cell model or more for a higher level of accuracy.

Considering now the various possible deployment scenarios in turn, for the case of DL transmissions transmitted between a base-station or node-B (NB), via an intermediate relay node (RN) to a destination user equipment (UE).

1A. Regenerative relay with FDD - Single-cell model as illustrated in Figure 1A

In this case, the SINR at a destination UE which is connected to an intermediate RN is given by:

$$SINR_{RN-UE} = \frac{G_p P_{tx,RN}}{L_{RN-UE}\,N} \qquad (1)$$

Where $G_p$ is the processing gain, $P_{tx,RN}$ is the transmit power on the channel of interest at the RN, $L_{RN-UE}$ is the propagation loss on the NB to RN link and $N$ is the noise. Note this assumes that no intra-cell interference exists.

The SINR at an intermediate RN which is operable to receive signals from the NB is given by:

$$SINR_{NB-RN} = \frac{G_p P_{tx,NB}}{L_{NB-RN}\,N} \qquad (2)$$

Where $P_{tx,NB}$ is the transmit power on the channel of interest at the NB and $L_{NB-RN}$ is the propagation loss on the RN to UE link. Again, it is assumed that no intra-cell interference exists.

The overall throughput across the multi-hop link will be limited by the lower of the two SINR values as this will limit the rate at which data can be transmitted to that entity. Any increase in transmit power that causes an SINR imbalance will not improve the performance of the multi-hop system; it will simply result in wasted energy and an increase in interference to any co-channel users.

Thus, assuming that the receiver at the intermediate RN and the receiver at the destination UE perform the same, then it follows that the transmit power at the NB and RN should be set such that the SINR at the RN and UE is the same. Using this criterion for setting the ratio of the transmit powers, it follows that the ratio is given by:

$$\frac{P_{tx,NB}}{P_{tx,RN}} = \frac{L_{NB-RN}}{L_{RN-UE}} = \frac{b_1 s_1^{n_1}}{b_2 s_2^{n_2}} \qquad (3)$$

14

Where $b_1$, and $n_1$ are the pathloss parameters for the NB to RN link which is $s_1$ in length and $b_2$, $n_2$ and $s_2$ are associated with the RN to UE link. Thus using equation (3) it is possible to find either transmit power given the other.

1B. Regenerative relay with FDD - two cell model as shown in Figure 1B

In this case, transmit power equations may be derived taking into account interference caused by transmissions arising in the other cell.

In this case the SINR at a destination UE that is operable to receive signals from an intermediate RN is now :

$$SINR_{RN-UE} = \frac{G_p P_{tx,RN}}{L_{RN-UE}\left(N + \frac{G_p P_{tx,RN}}{L_{RN-UE}}\right)} \tag{4}$$

The optimal NB transmit power can be found by setting (4) and (2) to be equal. Therefore:

$$P_{tx,NB} = \frac{L_{NB-RN} N P_{tx,RN}}{L_{RN-UE}\left(N + \frac{G_p P_{tx,RN}}{L_{RN-UE}}\right)}$$
$$= \frac{L_{NB-RN} P_{tx,RN}}{\left(L_{RN-UE} + \frac{G_p P_{tx,RN}}{N}\right)} \tag{5}$$

(5) can be rearranged to find the intermediate RN transmit power given the source NB transmit power:

$$P_{tx,RN} = \frac{L_{RN-UE}}{\left(\frac{L_{NB-RN}}{P_{tx,NB}} - \frac{G_p}{N}\right)} \tag{6}$$

2A. Regenerative relay with TDD: single cell model - Figure 1A

It is assumed that the two links (source to intermediate, intermediate to destination) operate on the same frequency with TDD being used to separate the receive and transmit operation of the RN (i.e. it is no longer full duplex). If it is assumed that the timeslot in which the RN transmits is not used by the NB then the equations described above for the case of a regenerative relay with an FDD duplexing scheme can be used. However, if the source NB uses the same timeslot as the intermediate RN to communicate with apparatuses or nodes other than the RN, interference will result to the transmission made by the RN. In this case the SINR at a destination UE that is operable to receive communication signals from an intermediate RN is given by:

$$SINR_{RN-UE} = \frac{G_p P_{tx,RN}}{L_{RN-UE}(N + I)}$$
$$= \frac{G_p P_{tx,RN}}{L_{RN-UE}\left(N + \frac{P_{tx\_tot,NB}}{L_{NB-UE}}\right)} \tag{7}$$

Where $P_{tx\_tot,NB}$ is the total transmission power from the NB and $L_{NB-UE}$ is the propagation loss on the NB to UE link. In this case the transmit power at the RN that ensures equal SINR is given by:

$$P_{tx,RN} = P_{tx,NB} \left( \frac{L_{RN-UE}}{L_{NB-RN}} \right) \left( 1 + \frac{P_{tx\_tot,NB}}{NL_{NB-UE}} \right) \qquad (8)$$

Comparing equation (3) and equation (8) it is apparent that a simple ratio no longer yields the ideal balance. Assuming that $P_{tx\_tot,NB} = G_p P_{tx,NB}$ it is possible to write equation (8) as:

$$\begin{aligned} P_{tx,RN} &= P_{tx,NB} \left( \frac{L_{RN-UE}}{L_{NB-RN}} \right) \left( 1 + \frac{G_p P_{tx,NB}}{NL_{NB-UE}} \right) \\ &= \left( \frac{L_{RN-UE}}{L_{NB-RN}} \right) \left( P_{tx,NB} + \frac{G_p P_{tx,NB}^2}{NL_{NB-UE}} \right) \end{aligned} \qquad (9)$$

From (9) it is possible to determine the ideal RN transmit power given the NB transmit power. It is worth noting that if the set-up of the system is arranged such that the second term in the second bracket is negligible (i.e. $P_{tx\_tot,NB}/NL_{NB-UE}$ <<1) then the criterion described above for the case of a regenerative relay with an FDD duplex scheme can be used.

It follows that the ideal NB transmit power given a certain RN transmit power can be found from the roots of (9). Expressing (9) in the following simplified form:

$$\frac{L_{RN-UE}}{L_{NB-RN}} P_{tx,NB} + \frac{L_{RN-UE}}{L_{NB-RN}} \frac{G_p}{NL_{NB-UE}} P_{tx,NB}^2 - P_{tx,RN} = 0 \qquad (10)$$

$$ax^2 + bx + c = 0$$

Where $x = P_{tx,NB}$, $a = \frac{G_p L_{RN-UE}}{NL_{NB-RN} L_{NB-UE}}$, $b = \frac{L_{RN-UE}}{L_{NB-RN}}$ and $c = -P_{tx,RN}$ it follows that the roots of (10) are given by:

$$x = \frac{-b \pm \sqrt{b^2 - 4ac}}{2a} \qquad (11)$$

As the constains a, b and the transmit power are always a positive number, only one root is defined, it therefore follows that the optimal transmit power at the NB that ensures equal SINR at the RN and UE is given by:

$$x = P_{tx,NB} = \frac{-b + \sqrt{b^2 + 4a P_{tx,RN}}}{2a} \qquad (12)$$

Finally, it is possible to use the definitions above to rewrite (9), which gives the optimal RN transmit power, in a similar simplified form:

$$P_{tx,RN} = b P_{tx,NB} + a P_{tx,NB}^2 \qquad (13)$$

## 2A. Regenerative relay with TDD: two-cell model as shown in Figure 1B

In addition to assuming that the deployment in both is identical and that the transmit powers on the NB and RN are the same, it is also assumed that where appropriate $P_{tx\_tot,RN} = G_p P_{tx,RN}$ and $P_{tx\_tot,NB} = G_p P_{tx,NB}$ and that for the case of TDD both RN's transmit at the same time. This in effect generates the worse case scenario for two cells.

In this case the SINR at the destination UE that is operable to receive signals from an intermediate RN is now:

$$SINR_{RN-UE} = \frac{G_p P_{tx,RN}}{L_{RN-UE}\left(N + \frac{2G_p P_{tx,NB}}{L_{NB-UE}} + \frac{G_p P_{tx,RN}}{L_{RN-UE}}\right)} \qquad (14)$$

The optimal NB transmit power can be found by setting (14) and (2) to be equal:

$$\frac{G_p P_{tx,NB}}{NL_{NB-RN}} = \frac{G_p P_{tx,RN}}{L_{RN-UE}\left(N + \frac{2G_p P_{tx,NB}}{L_{NB-UE}} + \frac{G_p P_{tx,RN}}{L_{RN-UE}}\right)}$$

$$P_{tx,RN} = P_{tx,NB}\left(\frac{L_{RN-UE}}{L_{NB-RN}}\right)\left(1 + \frac{2P_{tx\_tot,NB}}{NL_{NB-UE}} + \frac{P_{tx\_tot,RN}}{NL_{RN-UE}}\right) \qquad (15)$$

$$\left(\frac{L_{RN-UE}}{L_{NB-RN}}\right)\left(\frac{2G_p}{NL_{NB-UE}}\right)P_{tx,NB}^2 + \left(\frac{L_{RN-UE}}{L_{NB-RN}}\right)\left(1 + \frac{G_p P_{tx,RN}}{NL_{RN-UE}}\right)P_{tx,NB} - P_{tx,RN}$$

The optimal NB transmit power is found from the positive root of:

$$\left(\frac{L_{RN-UE}}{L_{NB-RN}}\right)\left(\frac{2G_p}{NL_{NB-UE}}\right)P_{tx,NB}^2 + \left(\frac{L_{RN-UE}}{L_{NB-RN}}\right)\left(1 + \frac{G_p P_{tx,RN}}{NL_{RN-UE}}\right)P_{tx,NB} - P_{tx,RN} = 0 \qquad (16)$$

Which is given by:

$$x = P_{tx,NB} = \frac{-b + \sqrt{b^2 - 4ac}}{2a} \qquad (17)$$

Where in this $a = \dfrac{2G_p L_{RN-UE}}{NL_{NB-RN} L_{NB-UE}}$, $b = \dfrac{L_{RN-UE}}{L_{NB-RN}}\left(1 + \dfrac{G_p P_{tx,RN}}{NL_{RN-UE}}\right)$ and $c = -P_{tx,RN}$, and both $b$ and $c$ are a function of the RN transmit power.

Given the NB transmit power it is possible to rearrange (15) to find the RN transmit. It follows that the optimal RN transmit power is given by:

$$P_{tx,RN} = \frac{\left(\dfrac{2G_p}{NL_{NB-UE}}\dfrac{L_{RN-UE}}{L_{NB-RN}}\right)P_{tx,NB}^2 + \left(\dfrac{L_{RN-UE}}{L_{NB-RN}}\right)P_{tx,NB}}{1 - \left(\dfrac{G_p}{NL_{RN-UE}}\dfrac{L_{RN-UE}}{L_{NB-RN}}\right)P_{tx,NB}} \qquad (18)$$

3A. Non-regenerative relay node (RN) with FDD — single cell model as shown in Figure 1A

The difference between this case and that of a regenerative relay node being used in conjunction with a FDD duplexing scheme is that the SINR at the UE *is a function of* the SINR at the RN, where the SINR at the destination UE which is connected to the RN is given by:

$$SINR_{RN-UE} = \frac{G_p P_{tx,RN}}{L_{RN-UE}\left(N + \dfrac{P_{tx,RN}}{L_{RN-UE}\,SINR_{NB-RN}}\right)} \qquad (19)$$

The result is that the ideal balance is no longer derived from setting the SINR at the UE equal to that at the RN. According to (19), the SINR at the RN needs to be set so that it does not prevent this target SINR at the UE from being obtained. However, the NB power must be controlled to limit the SINR at the RN rising beyond that practically required else excess interference and wasted transmit power will result.

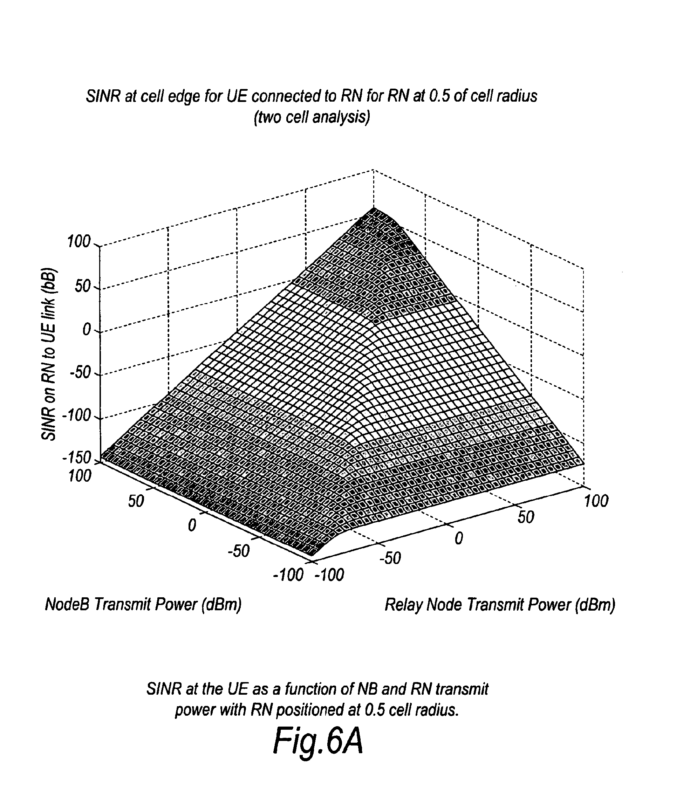

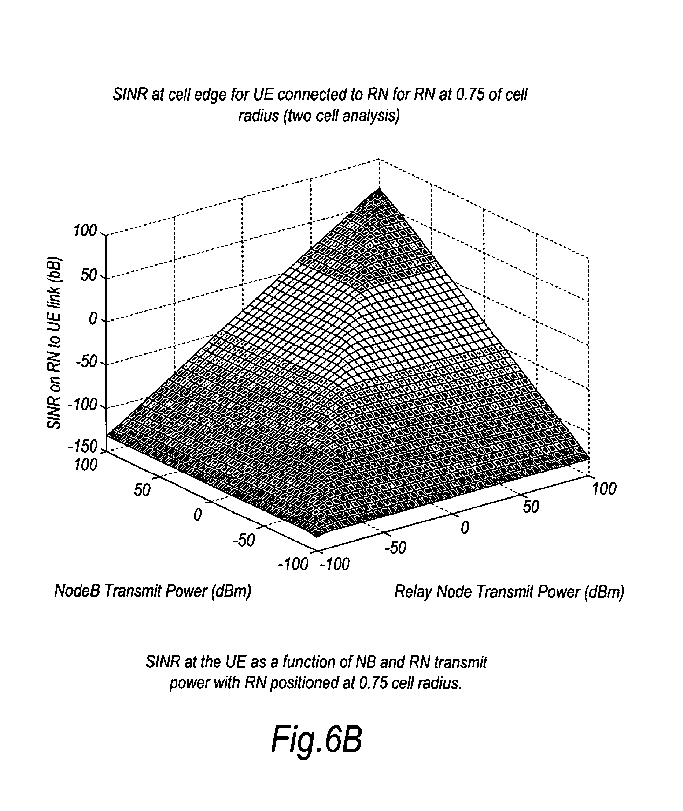

Figure 6 illustrates how the setting of NB and RN transmit power affects the SINR at the UE connected to the RN for a two different deployment scenarios.

Thus, it can be seen that the optimal solution is to select the transmit power of the NB and RN such that the system effectively operates on the diagonal fold in the surface shown in Figure 6. It is possible to realise such a solution by taking the first derivative of (19) and finding the point at which increasing either the NB or RN transmit power results in minimal increase to SINR at UE.

In order to determine the first derivative of (19), it is rewritten as:

$$SINR_{RN-UE} = \frac{G_p P_{tx,RN}}{L_{RN-UE}\left(N + \dfrac{P_{tx,RN}}{L_{RN-UE}\,\dfrac{G_p P_{tx,NB}}{N L_{NB-RN}}}\right)}$$

$$= \frac{1}{\left(\dfrac{N L_{RN-UE}}{G_p P_{tx,RN}}\right) + \left(\dfrac{N L_{NB-RN}}{G_p^2 P_{tx,NB}}\right)} \qquad (20)$$

Defining $y = SINR_{RN-UE}$, $k_1 = \dfrac{N L_{RN-UE}}{G_p}$ and $k_2 = \dfrac{N L_{NB-RN}}{G_p^2}$ it is possible to simplify (20) to be:

$$y = \frac{1}{\dfrac{k_1}{P_{tx,RN}} + \dfrac{k_2}{P_{tx,NB}}} = \frac{P_{tx,NB}}{\dfrac{k_1 P_{tx,NB}}{P_{tx,RN}} + k_2} \qquad (21)$$

In order to find the rate of change of SINR with $P_{tx,NB}$ the quotient rule for differentiation is used:

$$\frac{dy}{d\left(P_{tx,NB}\right)} = \frac{k_2}{\left(\dfrac{k_1}{P_{tx,RN}}P_{tx,NB} + k_2\right)^2} = \nabla_{NB} \qquad (22)$$

By solving (22) for $P_{tx,NB}$ given the required gradient and $P_{tx,RN}$ it is possible to find the optimal NB transmit power:

$$P_{tx,NB} = \frac{P_{tc,RN}\left(\sqrt{\dfrac{k_2}{\nabla_{NB}}} - k_2\right)}{k_1} \qquad (23)$$

In order to find the optimal RN transmit power given that of the NB, the differentiation of (21) is now performed with respect to $P_{tx,RN}$. In this case the first order derivative is given by:

$$\frac{dy}{d(P_{tx,RN})} = \frac{k_1}{\left(\dfrac{k_2}{P_{tx,NB}}P_{tx,RN} + k_1\right)^2} = \nabla_{RN} \qquad (24)$$

And the optimal RN transmit power given that of the NB is:

$$P_{tx,RN} = \frac{P_{tc,NB}\left(\sqrt{\dfrac{k_1}{\nabla_{RN}}} - k_1\right)}{k_2} \qquad (25)$$

3B. Non-regenerative relay node (RN) with FDD — two cell model as shown in Figure 1B

In a two cell model the SINR for the worse case of a destination UE at the cell edge is given by:

$$\begin{aligned}
SINR_{RN-UE} &= \frac{G_p P_{tx,RN}}{L_{RN-UE}\left(N + \dfrac{P_{tx,RN}}{L_{RN-UE}SINR_{NB-RN}} + \dfrac{G_p P_{tx,RN}}{L_{RN-UE}}\right)} \\
&= \frac{1}{\left(\dfrac{NL_{RN-UE}}{G_p P_{tx,RN}}\right) + \left(\dfrac{NL_{NB-RN}}{G_p^2 P_{tx,NB}}\right) + 1}
\end{aligned} \qquad (26)$$

Assuming that the transmit power of the two RN's is equal, the deployment is identical across the two cells and that $P_{tx\_tot,RN} = G_p P_{tx,RN}$, then the simplified form of (26) is given by:

$$\begin{aligned}
SINR_{RN-UE} &= \frac{1}{\dfrac{k_1}{P_{tx,RN}} + \dfrac{k_2}{P_{tx,NB}} + 1} \\
&= \frac{P_{tx,NB}}{\left(\dfrac{k_1}{P_{tx,RN}} + 1\right)P_{tx,NB} + k_2}
\end{aligned} \qquad (27)$$

The first derivative is now:

$$\frac{dy}{d(P_{tx,NB})} = \frac{k_2}{\left(\left(\frac{k_1}{P_{tx,RN}}+1\right)P_{tx,NB}+k_2\right)^2} \tag{28}$$

Thus the optimal NB transmit power can be found by:

$$P_{tx,NB} = \frac{P_{tx,RN}\sqrt{\frac{k_2}{\nabla}}-k_2}{k_1+P_{tx,RN}} \tag{29}$$

The optimal RN transmit power is found by taking the derivative of (27) with respect to $P_{tx,RN}$:

$$\frac{dy}{d(P_{tx,RN})} = \frac{k_1}{\left(\left(\frac{k_2}{P_{tx,NB}}+1\right)P_{tx,RN}+k_1\right)^2} \tag{30}$$

Thus the optimal RN transmit power can be found by:

$$P_{tx,RN} = \frac{P_{tx,NB}\sqrt{\frac{k_1}{\nabla}}-k_1}{k_2+P_{tx,NB}} \tag{31}$$

4A - Non-regenerative relay with TDD - single cell model as shown in Figure 1A

This case is similar to that described above for a non-regenerative except for the fact that now interference from the NB must be taken into account due to the fact that it transmits on the same frequency and at the same time as the RN. In this case the SINR at the UE which is receiving communication signals transmitted by the RN is given by:

$$SINR_{RN-UE} = \frac{G_p P_{tx,RN}}{L_{RN-UE}\left(N+\frac{P_{tx,RN}}{L_{RN-UE}SINR_{NB-RN}}+\frac{P_{tx\_tot,NB}}{L_{NB-UE}}\right)} \tag{32}$$

If the $P_{tx,NB}/P_{tx,RN}$ is too large then the SINR at the UE is limited due to insufficient RN transmit power and it is likely the area in which the link performance of a connection to a RN outperforms that for a connection to the NB is reduced. Conversely, if it is too small then the SINR at the UE is limited by the low SINR at the RN.

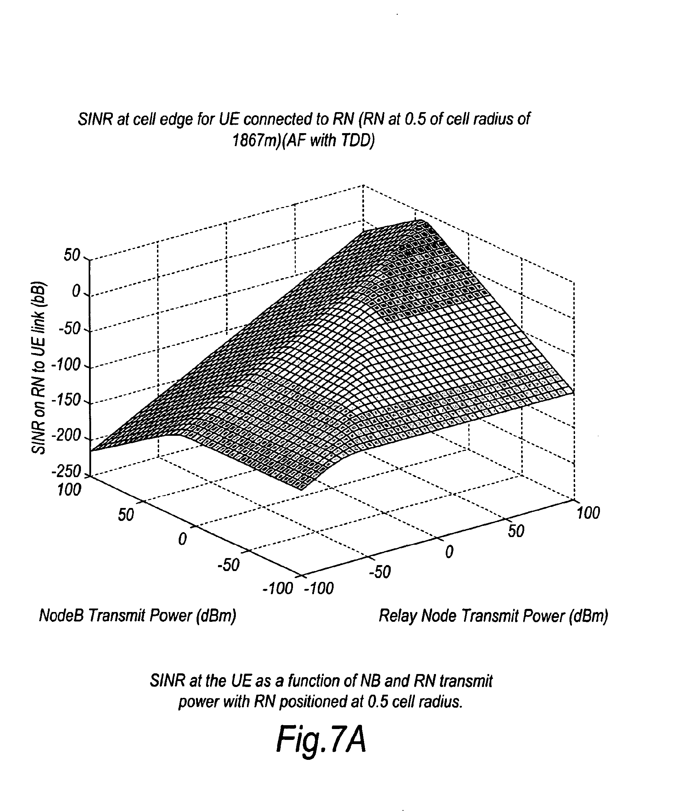

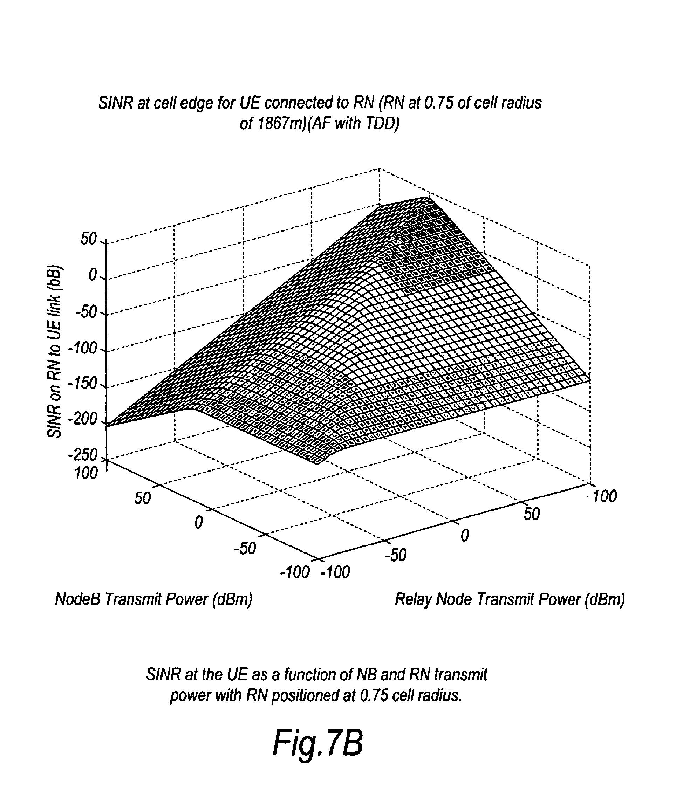

In this case, the balance is even finer than of that described in the case of a non-regenerative relay node employed in conjunction with an FDD duplexing scheme, as illustrated by Figure 7. The optimal operating point is given by finding the point at which the first derivative of (32) is equal to zero. In order to find this optimal point, (32) is first rearranged in the following form:

$$SINR_{RN-UE} = \frac{G_p P_{tx,RN}}{L_{RN-UE}\left(N + \frac{P_{tx,RN}}{L_{RN-UE}\left(\frac{G_p P_{tx,NB}}{NL_{NB-RN}}\right)} + \frac{P_{tx\_tot,NB}}{L_{NB-UE}}\right)}$$

$$= \frac{1}{\left(\frac{NL_{RN-UE}}{G_p P_{tx,RN}}\right) + \left(\frac{NL_{NB-RN}}{G_p^2 P_{tx,NB}}\right) + \left(\frac{L_{RN-UE} P_{tx,NB}}{L_{NB-UE} P_{tx,RN}}\right)} \tag{33}$$

Defining $y = SINR_{RN-UE}$, $k_1 = \dfrac{NL_{RN-UE}}{G_p}$ and $k_2 = \dfrac{NL_{NB-RN}}{G_p^2}$

Using the definitions from the description in 3A above and $k_3 = \left(\dfrac{L_{RN-UE}}{L_{NB-UE}}\right)$ it is possible to simplify (33) to:

$$y = \frac{1}{\left(\frac{k_1}{P_{tx,RN}}\right) + \left(\frac{k_2}{P_{tx,NB}}\right) + \left(\frac{k_3 P_{tx,NB}}{P_{tx,RN}}\right)} = \frac{P_{tx,NB}}{\left(\frac{k_1}{P_{tx,RN}}\right)P_{tx,NB} + k_2 + \left(\frac{k_3}{P_{tx,RN}}\right)P_{tx,NB}^2} \tag{34}$$

The next step is to find the single maxima of the parabolic function in (34) by solving:

$$\frac{dy}{dx} = 0 \tag{35}$$

Using the quotient rule to find the first derivative of (34):

$$\frac{dy}{d(P_{tx,NB})} = \frac{\frac{k_1}{P_{tx,RN}}P_{tx,NB} + k_2 + \frac{k_3}{P_{tx,RN}}P_{tx,NB}^2 - P_{tx,NB}\left(\frac{k_1}{P_{tx,RN}} + \frac{2k_3}{P_{tx,RN}}P_{tx,NB}\right)}{\left(\frac{k_1}{P_{tx,RN}}P_{tx,NB} + k_2 + \frac{k_3}{P_{tx,RN}}P_{tx,NB}^2\right)^2} \tag{36}$$

The maxima of *y* is found by setting (36) equal to zero and solving for $P_{tx,NB}$. It follows that the maximum SINR at the UE is obtained by setting:

$$\frac{k_1}{P_{tx,RN}}P_{tx,NB} + k_2 + \frac{k_3}{P_{tx,RN}}P_{tx,NB}^2 = P_{tx,NB}^2\left(\frac{k_1}{P_{tx,RN}} + \frac{2k_3}{P_{tx,RN}}P_{tx,NB}^2\right)$$

$$P_{tx,NB} = \sqrt{\frac{P_{tx,RN}k_2}{2k_3}} \tag{37}$$

Therefore, given the transmit power of the RN it is possible to use (37) to find the corresponding NB transmit power that ensures maximum SINR at the UE that is connected to the RN.

For the case of finding the optimal RN transmit power given the NB transmit power a similar approach to that described in above in the case of a non-regenerative relay node employed in conjunction with an FDD duplexing scheme, can be used as the SINR at the UE is not a parabolic function of RN transmit power. In order to find the optimal RN transmit power, (34) is rearranged to the following:

$$y = \frac{1}{\left(\dfrac{k_1}{P_{tx,RN}}\right) + \left(\dfrac{k_2}{P_{tx,NB}}\right) + \left(\dfrac{k_3 P_{tx,NB}}{P_{tx,RN}}\right)} = \frac{P_{tx,RN}}{\left(\dfrac{P_{tx,RN} k_2}{P_{tx,NB}}\right) + k_3 P_{tx,NB} + k_1} \qquad (38)$$

The first derivative is now:

$$\frac{dy}{d\left(P_{tx,RN}\right)} = \frac{k_3 P_{tx,NB} + k_1}{\left(\left(\dfrac{P_{tx,RN} k_2}{P_{tx,NB}}\right) + k_3 P_{tx,NB} + k_1\right)^2} = \nabla \qquad (39)$$

Solving (39) for $P_{tx,RN}$ gives the optimal RN transmit power given the NB transmit power:

$$P_{tx,RN} = \frac{P_{tx,NB}\left(\sqrt{\dfrac{k_3 P_{tx,NB} + k_1}{\nabla}} - \left(k_3 P_{tx,NB} + k_1\right)\right)}{k_2} \qquad (40)$$

By observing the surface in Figure 7 and from the form of (34) and the result in (40) it is apparent that if the NB transmit power is small then the rate of change of SINR with RN transmit power will decrease with increasing RN transmit power. However, for the case of large NB transmit power, the SINR at the UE approximates to a linear function of RN transmit power. The result is that in this case the solution to the problem, as summarised in (40) will be infinite.

4B - Non-regenerative relay with TDD — two cell model as shown in Figure 1B

The worse case, from the perspective of a UE at the cell edge, is when the neighbouring cell employs a TDD scheme with the same timeslot used for RN transmission. If it is assumed that the cells are equal in size with the same deployment and transmit power settings and that $P_{tx\_tot,RN/NB} = G_p P_{tx,RN/NB}$ then:

$$SINR_{RN-UE} = \frac{G_p P_{tx,RN}}{L_{RN-UE}\left(N + \dfrac{P_{tx,RN}}{L_{RN-UE} SINR_{NB-R1}} + \dfrac{2 G_p P_{tx,NB}}{L_{NB-UE}} + \dfrac{G_p P_{tx,RN}}{L_{RN-UE}}\right)}$$
$$= \frac{1}{\left(\dfrac{N L_{RN-UE}}{G_p P_{tx,RN}}\right) + \left(\dfrac{N L_{NB-RN}}{G_p^2 P_{tx,NB}}\right) + \left(\dfrac{2 L_{RN-UE} P_{tx,NB}}{L_{NB-UE} P_{tx,RN}}\right) + 1} \qquad (41)$$

In this case the simplified form of (4) is:

$$SINR_{RN-UE} = \cfrac{1}{\cfrac{k_1}{P_{tx,RN}} + \cfrac{k_2}{P_{tx,NB}} + \cfrac{2k_3}{P_{tx,RN}} P_{tx,NB} + 1}$$

$$= \cfrac{P_{tx,NB}}{\left(\cfrac{k_1}{P_{tx,RN}} + 1\right) P_{tx,NB} + k_2 + \cfrac{2k_3}{P_{tx,RN}} P_{tx,NB}^2}$$

(42)

And the first derivative is:

$$\frac{dy}{d(P_{tx,NB})} = \cfrac{\left(\cfrac{k_1}{P_{tx,RN}} + 1\right) P_{tx,NB} + k_2 + \cfrac{2k_3}{P_{tx,RN}} P_{tx,NB}^2 - P_{tx,NB}\left(\cfrac{k_1}{P_{tx,RN}} + 1 + \cfrac{4k_3}{P_{tx,RN}} P_{tx,NB}\right)}{\left(\left(\cfrac{k_1}{P_{tx,RN}} + 1\right) P_{tx,NB} + k_2 + \cfrac{2k_3}{P_{tx,RN}} P_{tx,NB}^2\right)^2}$$

(43)

Finally, the maxima is given by setting (43) equal to zero and solving for $P_{tx,NB}$:

$$\left(\frac{k_1}{P_{tx,RN}} + 1\right) P_{tx,NB} + k_2 + \frac{2k_3}{P_{tx,RN}} P_{tx,NB}^2 = P_{tx,NB}\left(\frac{k_1}{P_{tx,RN}} + 1 + \frac{4k_3}{P_{tx,RN}} P_{tx,NB}\right)$$

$$k_2 + \frac{2k_3}{P_{tx,RN}} P_{tx,NB}^2 = \frac{4k_3}{P_{tx,RN}} P_{tx,NB}^2$$

(44)

$$P_{tx,NB} = \sqrt{\frac{P_{tx,RN} k_2}{2k_3}}$$

In order to find the optimal RN transmit power given the NB transmit power (42) is rearranged to:

$$y = \cfrac{1}{\cfrac{k_1}{P_{tx,RN}} + \cfrac{k_2}{P_{tx,NB}} + \cfrac{2k_3}{P_{tx,RN}} P_{tx,NB} + 1}$$

$$= \cfrac{P_{tx,RN}}{k_1 + \cfrac{k_2 P_{tx,RN}}{P_{tx,NB}} + 2k_3 P_{tx,NB} + P_{tx,RN}}$$

(45)

The first derivative is now:

$$\frac{dy}{d(P_{tx,RN})} = \cfrac{k_1 + 2k_3 P_{tx,NB}}{\left(k_1 + 2k_3 P_{tx,NB} + P_{tx,RN}\left(1 + \cfrac{k_2}{P_{tx,NB}}\right)\right)^2} = \nabla$$

(46)

Solving (46) for $P_{tx,RN}$ gives the optimal RN transmit power given the NB transmit power:

$$P_{\alpha,RN} = \frac{P_{\alpha,NB}\sqrt{\dfrac{k_1 + 2k_3 P_{\alpha,NB}}{\nabla}} - \left(k_1 + 2k_3 P_{\alpha,NB}\right)}{\left(P_{\alpha,NB} + k_2\right)} \qquad (47)$$

Again, in the case of large NB transmit power, the SINR at the UE approximates to a linear function of RN transmit power. The result is that the solution to (47) will be infinite.

The optimal transmit power balance will now be determined based on the solutions developed above for the different relay and duplexing schemes and for two separate deployment scenarios. These deployment scenarios are summarised in Table III and the propagation parameters of the pathloss equation in (48) are in Table IV.

$$L = b + 10n\log d \qquad (48)$$

Where $L$ is the pathloss in dB, $b$ is in dB and is given in Table along with $n$, and $d$ is the transmitter-receiver separation in metres.

**Table III. Deployment scenarios**

| Parameter | Scenario 1 | Scenario 2 |
|---|---|---|
| Cell Radius | 1867m | |
| Relay Position | 933m | 1400m |

The transmitter receiver separation is the same as the cell radius (i.e. the UE is located at the cell radius). The RN position quoted is relative to the centre of the cell which is where theNB is located. The RN positions are therefore the distance from the NB to the RN. The RN-UE is then the difference of the cell radius and the NB-RN separation.

**Table IV. Propagation parameters.**

| Parameter | NB-UE | NB-RN | RN-UE |
|---|---|---|---|
| b (dB) | 15.3 | 15.5 | 28 |
| n | 3.76 | 3.68 | 4 |

Regenerative relay

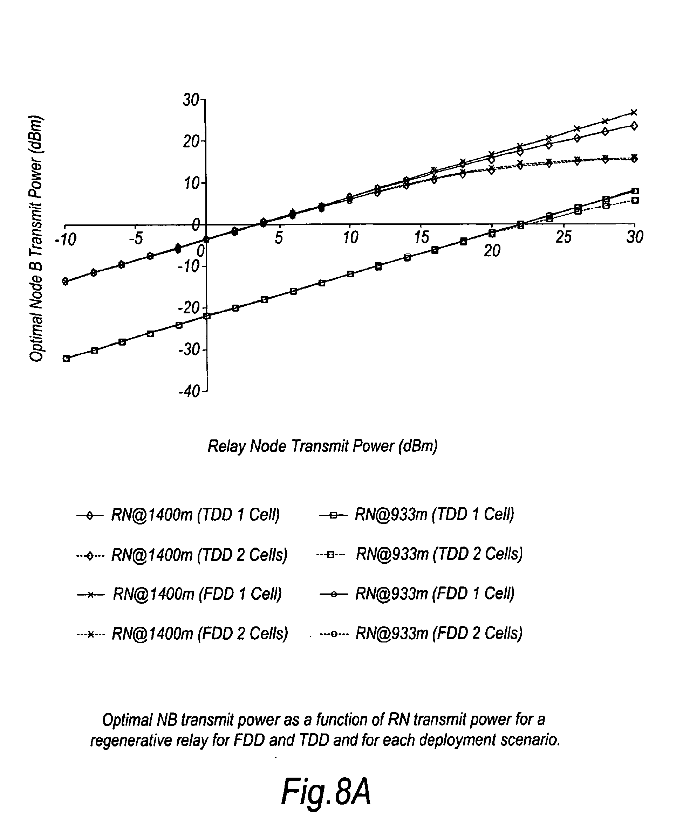

Substituting the values given in Table III and Table IV into equations (3) and (5) for FDD and (12) and (17) for TDD it is possible to find the optimal NB transmit power given the RN transmit power. Figure 8A shows the optimal NB transmit power as a function of RN transmit power for both FDD and TDD for the two deployment scenarios.

Non-Regenerative relay with FDD

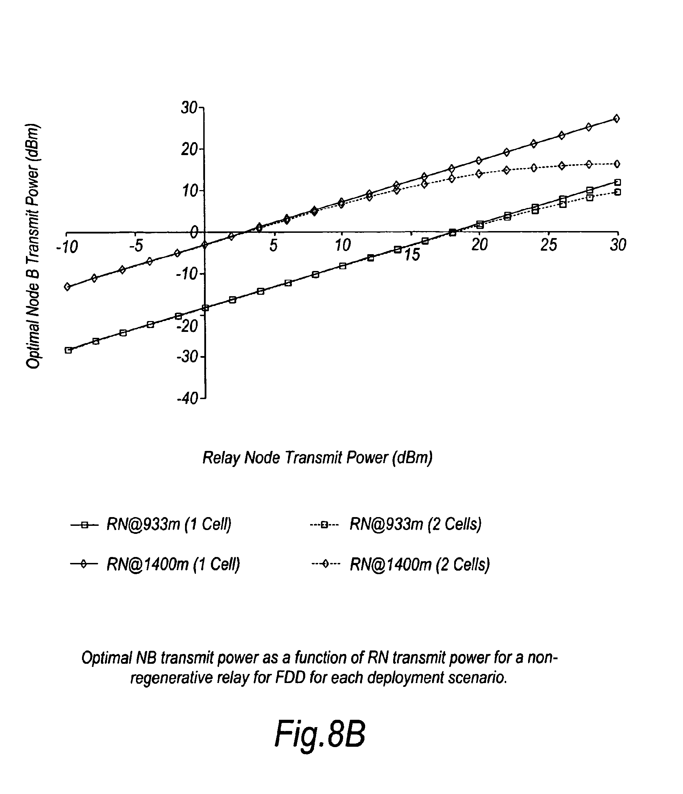

Substituting the parameters into (23) and (24) it is possible to find the optimal NB transmit power for the two deployment scenarios, as shown in Figure 8B.

Non-Regenerative relay with TDD

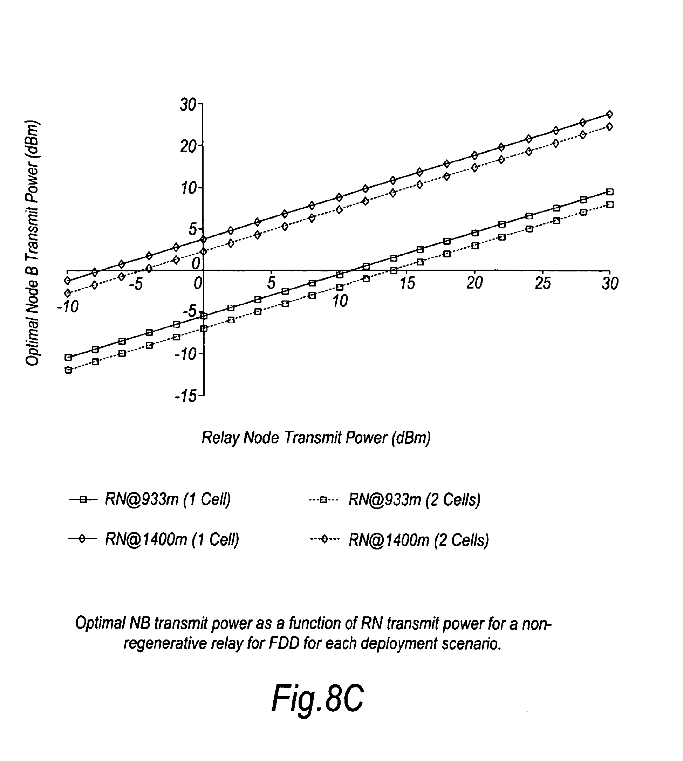

Substituting the parameters into (37) and (44) it is possible to find the optimal NB transmit power for the two deployment scenarios, as shown in Figure 8C.

System level simulation results

System simulation of a multi-hop HSDPA network employing non-regenerative relays with TDD duplexing with relays transmitting in every third transmission time interval have been conducted in order to validate the predicted optimal transmit power setting based on results of Figure 8C, with the average packet call throughput gain being determined as the transmit powers of the RN and NB are varied around the optimal point.

Results of a system level simulation for the two deployment scenarios detailed above in Table III will now be presented. The simulation parameters are listed below in Table V and Table VI.

**Table V. Deployment parameters**

| Parameter | | Value |
|---|---|---|
| Base Station | Inter-cell Separation | 2.8 km |
| | Sectors/cell | 3 |
| | Antenna Height | 15 m |
| | Antenna Gain | 17 dBi |
| Relay Station | RN antenna | 120° |
| | Position | ½ and ¾ cell radius |
| | Num/cell | 9 |
| | Antenna Height | 5 m |
| | Antenna Gain | 17 dBi |
| User Equipment | Number per sector | 50 |
| | Initial Distribution | Random |
| | Velocity | 3 km/h |
| | Direction | Semi-directed |
| | Update | 20 m |
| Traffic Models | | WWW |

**Table VI. Simulation parameters**

| Parameters | | Value |
|---|---|---|
| Base Station/Relay Node | HS-DSCH power | Variable |
| | CPICH power | 20% of total |
| | HARQ scheme | Chase |
| | HS-DSCH/frame | 15 |
| | Relay buffer size | 1.78 Mbits |
| | Ack/NAck Detection | Error free |
| | NB Scheduler | Round Robin |
| | Relay type | Amplify & Forward |
| User Equipment | | 10 |
| | Thermal Noise Density | -174 dBm/Hz |
| | Noise Figure | 5dBm |
| | Detector | MMSE |

For both deployment scenarios the gain in the average packet call throughput experienced by the users on that observed for the case of a single hop system with NB transmission power of 30dBm is plotted as a function of NB transmit power for four different RN transmit powers. Figure 9A shows the gain for deployment scenario 1 and Figure 9B shows the gain for scenario 2.

Note that the channel gain for the NB to UE link was 3dB higher than for the NB to RN and RN to UE link. This means that the interference experienced by a UE connected to a RN from another NB is double that used in the link analysis discussed above with reference to Figures 6A, 6B and 6C.

The channel gain is due to the fact that a number of replicas of the transmitted signal are received, when the power on all these is added it is found that for the case of the NB to UE channel the total power is double that on the NB to RN or RN to UE channel.

This accounts for the 3dB gain, as 3dB equates to double. As a result of the channel gain being higher for the NB to UE channel, this means that the received signal power will be 3dB (or double) higher than that used in the analysis up to that point where no channel gain through multi-path was considered.

Comparison of link based prediction and system simulation

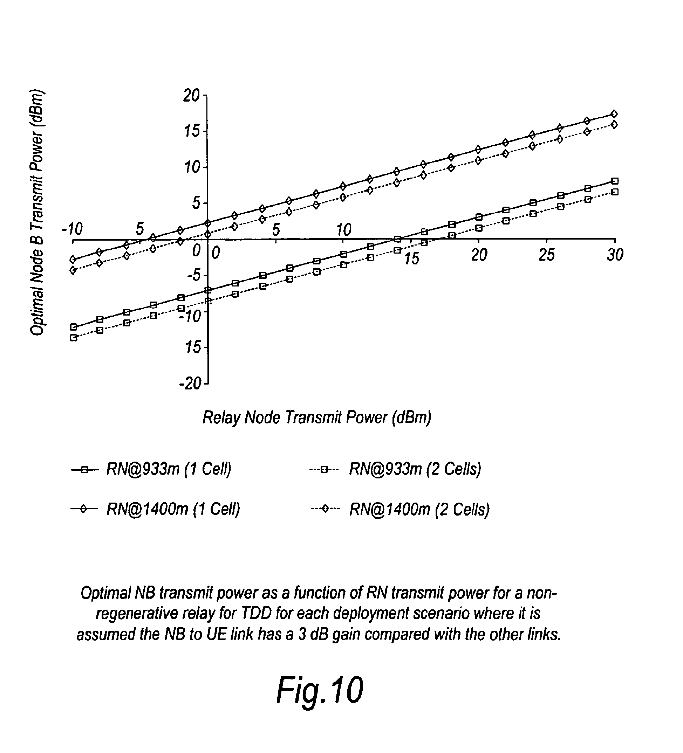

Figure 10 shows the optimal NB transmit power as a function of RN transmit power for a non-regenerative relay for TDD for each deployment scenario where it is assumed the NB to UE link has a 3dB gain compared with the other links. In this case, the predicted transmit power at the NB for the RN transmit power used in the simulation are listed in Table VII along with the throughput gain that would be experienced if these settings were used and the maximum achievable.

**Table VII. Predicted optimal NB transmit power and resulting simulated throughput gain that would have been achieved from this setting compared with the maximum gain observed.**

| RN Transmit Power (dBm) | NB Transmit Power (dBm) & User Packet Throughput Gain | | | | | |
| | Predicted | Scenario 1 Throughput Gain | Max Gain | Predicted | Scenario 2 Throughput Gain | Max Gain |
|---|---|---|---|---|---|---|
| 16 | -0.5 | 33% | 40% | 8.8 | 60% | 67% |
| 19 | 1 | 38% | 43% | 10.3 | 65% | 74% |
| 22 | 2.5 | 41% | 46% | 11.8 | 68% | 74% |
| 25 | 4 | 49% | 51% | 13.3 | 72% | 75% |

Table VII, Figure 8A and Figure 9B suggest that if power balancing is performed according to a preferred embodiment of the present invention using a technique based on the equations developed above then the selected power balance will in general be in the region of the optimal point. In particular, for the transmit powers used the gain was shown to always be within 10% of the achievable maximum, with the difference being due to shortcomings of using of a two-cell model to model a multi-cell system.

The necessity of transmit power balancing is apparent in the results presented in both Figure 9A and Figure 9B where it is shown that if the NB transmit is increased beyond the optimal point then a significant degradation in gain will be experienced despite the emission of more signal energy. It also shows that if the NB transmit power is selected carefully then the sensitivity of the gain to RN transmit power is reduced.

**Claims**

1. A communication system comprising a base station (NB), a destination apparatus (UE) and at least one intermediate apparatus (RN), the base station being operable to transmit a communication signal, via the or each intermediate apparatus, to the destination apparatus, wherein the destination apparatus comprises indicator derivation means operable to derive one or more indicators of the quality of a communication signal received at the destination apparatus, the system comprising:

   i) indicator deviation detection means (1), operable to detect a deviation in the, or one of the, indicators derived by the destination apparatus from a desired value;
   ii) control means (3), provided in the base station, comprising a first calculation means operable, following detection of such a deviation, to calculate a new transmit power for the intermediate apparatus, or a new transmit power for the intermediate apparatus and the base station, that will tend to a) reduce an imbalance between a measure of a quality of a communication signal received at the intermediate apparatus and a measure of the quality of a communication signal received at the destination apparatus; or b) prevent such an imbalance from arising.

2. A communication system as claimed in claim 1, wherein one said indicator derived by said destination apparatus (UE) comprises a measure of the strength of a communication signal received at the destination apparatus.

3. A communication system as claimed in claim 1 or 2, wherein one said indicator derived by said destination apparatus (UE) comprises a measure of the signal-to-interference plus noise ratio (SINR) of a communication signal received at the destination apparatus.

4.  A communication system as claimed in any one of claims 1, 2 or 3, wherein one said indicator derived by said destination apparatus (UE) comprises a measure of the variation of the quality of a communication signal received at the destination apparatus from a target received signal quality set for the destination apparatus.

5.  A communication system as claimed in any preceding claim wherein said imbalance comprises a difference between a measure of the signal-to-interference plus noise ratio of a communication signal received at the destination apparatus (UE) and a measure of the signal-to interference plus noise ratio of a communication signal received at the intermediate apparatus (RN).

6.  A communication system as claimed in any preceding claim, wherein the indicator deviation detection means (1) is provided in the destination apparatus (UE), and wherein the destination apparatus further comprises request transmission means operable, following detection of a deviation by said indicator deviation detection means, to transmit a request to the first calculation means (3), either directly or via the intermediate apparatus, for the calculation of a new transmit power for the intermediate apparatus which will tend to a) reduce an imbalance between a measure of a quality of a communication signal received at the intermediate apparatus (RN) and a measure of the quality of a communication signal received at the destination apparatus; or b) prevent said imbalance from arising.

7.  A communication system as clamed in claim 6, wherein the first calculation means (3) is operable to receive a request transmitted by said destination apparatus and wherein said first calculation means is operable, following receipt of such request by the control means (3), to calculate a new transmit power for the intermediate apparatus (RN) which will tend to satisfy the request.

8.  A communication system as claimed in any preceding claim, wherein the control means (3) is operable, following a calculation of a new transmit power for the intermediate apparatus (RN) by said first calculation means, to determine if said new transmit power of the intermediate apparatus is greater than a maximum transmit power of the intermediate apparatus (RN).

9.  A communication system as claimed in claim 8, wherein if it is determined by the control means (3) that said new transmit power is greater than said maximum transmit power, the first calculation means calculates a second new transmit power for the intermediate apparatus (RN) which does not exceed said maximum transmit power of the intermediate apparatus.

10.  A communication system as claimed in any one of claims 6 to 9, wherein the control means (3) is operable to receive an input signal which allows the control means to determine if the request is due to a deviation in a variation from target indicator derived by the destination apparatus (UE) which arises due to a change in the target received signal quality set for the destination apparatus.

11.  A communication system as claimed in claim 10 wherein, if it is determined that the request arises due to a change in the target received signal quality of the destination apparatus (UE), the first calculation means (3) is further operable to calculate a new transmit power for the base station (NB), based on the new transmit power calculated for the intermediate apparatus (RN), to thereby tend to prevent an imbalance between a measure of a quality of a communication signal received at the intermediate apparatus and a measure of the quality of a communication signal received at the destination apparatus from arising.

12.  A communication system as clamed in claim 11, wherein the control means (3) is operable, following a calculation of a new transmit power for the base station, to determine if said new transmit power for the base station (NB) is greater than a maximum transmit power for the base station.

13.  A communication system as claimed in claim 12, wherein if it is determined by the control means (3) that said new transmit power is greater than the maximum transmit power of the base station (NB), the first calculation means calculates a second new transmit power for the base station which does not exceed said maximum.

14.  A communication system as claimed in claim 13, wherein said first calculation means is operable, following the calculation of a second new transmit power for the base station, to calculate a second new transmit power for the intermediate apparatus which will tend to prevent an imbalance from arising.

15. A communication system as claimed in any preceding claim, wherein said intermediate apparatus (RN) comprises indicator derivation means operable to derive one or more indicators of the quality of a communication signal received at the intermediate apparatus, wherein said intermediate apparatus and said destination apparatus are each operable to transmit one said indicator derived thereby to said control means (3), the control means further comprising:

    i) imbalance detection means operable to detect an imbalance between one said indicator derived by the destination apparatus and one said indicator derived by the intermediate apparatus; and
    ii) second calculation means operable, following detection of such an imbalance, to calculate a new transmit power for the base station which will tend to reduce said imbalance.

16. A communication system as claimed in claim 15, wherein one said indicator derived by each of the intermediate apparatus (RN) and the destination apparatus (UE) comprises a measure of the strength of a communication signal received at the destination apparatus or intermediate apparatus, as the case may be.

17. A communication system as claimed in claim 15 or 16, wherein one said indicator derived by each of said intermediate apparatus (RN) and said destination apparatus (UE) comprises a measure of the signal-to-interference plus noise ratio (SINR) of a communication signal received at the destination apparatus or the intermediate apparatus, as the case may be.

18. A communication system as claimed in claim 16 or 17, wherein said imbalance detection comprises a pathloss updating means operable, following receipt of said indicators from both said destination apparatus (UE) and said intermediate apparatus (RN), or following a change in one or both of said indicators received by said control means (3), to determine a measure of the pathloss experienced by a communication signal being transmitted between the base station (NB) and the intermediate apparatus, and between the intermediate apparatus and the destination apparatus.

19. A communication system as claimed in claim 18, wherein the path loss updating means determines the measure of the path loss experienced by a communication signal being transmitted between the base station (NB) and the intermediate apparatus (RN) from a measure of the transmit power of the base station when that communication signal was transmitted.

20. A communication system as claimed in claim 18 or 19, wherein the pathloss updating means determines the measure of the pathloss experienced by a communication signal being transmitted between the intermediate apparatus (RN) and the destination apparatus (UE) from a measure of the transmit power of the intermediate apparatus when that communication signal was transmitted.

21. A communication system as claimed in claim 20, wherein the intermediate apparatus (RN) is operable to transmit a transmit power indicator which is indicative of a measure of a current transmit power of the intermediate apparatus to the pathloss updating means, the pathloss updating means being operable to receive said transmit power indicator and to utilise said transmit power indicator to determine the pathloss experienced by a communication signal being transmitted between the intermediate apparatus and the destination apparatus (UE).

22. A communication system as claimed in claim 18, wherein the knowledge of the transmit power of the intermediate apparatus (RN) is determined from i) a measure of the transmit power of the intermediate apparatus at an initial time and ii) knowledge of changes in the transmit power of the intermediate apparatus which have occurred since said initial time.

23. A communication system as claimed in any one of claims 18 to 22, when appended to claim 6 wherein, in the absence of a request for a change in the transmit power of the intermediate apparatus (RN) from the destination apparatus (UE), and following a change in the measure of the pathloss experienced between the intermediate apparatus and the destination apparatus determined by the pathloss updating means, the second calculation means is operable to calculate the change in the transmit power of the base station (NB) that is required to in order to tend to balance a measure of the quality of a communication signal received at the intermediate apparatus and a measure of the quality of a communication signal received at the destination apparatus.

24. A communication system as claimed in any one of claims 18 to 22, when appended to claim 10, wherein said input signal comprises an indicator of the pathloss experienced between the intermediate apparatus (RN) and the destination apparatus (UE) as determined by said pathloss updating means.

25. A communication system comprising a base station (NB), a destination apparatus (UE) and at least one intermediate apparatus (RN), the base station being operable to transmit a communication signal, via the or each intermediate apparatus, to the destination apparatus, said base station comprising a control means (3), wherein each of the destination apparatus and the intermediate apparatus comprise: indicator derivation means operable to derive one or more indicators of the quality of a communication signal received at the destination apparatus or the intermediate apparatus respectively, wherein said intermediate apparatus and said destination apparatus are operable to transmit said indicators to said control means, the control means comprising:

    i) imbalance detection means operable to detect an imbalance between one said indicator derived by destination apparatus and one said indicator derived by the intermediate apparatus; and
    ii) calculation means operable, following detection of such an imbalance, to calculate a new transmit power for the base station which will tend to reduce said imbalance.

26. A communication system as claimed in claim 25, wherein one said indicator derived by each of the intermediate apparatus (RN) and the destination apparatus (UE) comprises a measure of the strength of a communication signal received at the destination apparatus or the intermediate apparatus respectively.

27. A communication system as claimed in claim 25 or 26, wherein one said indicator derived by each of said intermediate apparatus and said destination apparatus comprises a measure of the signal-to-interference plus noise ratio (SINR) of a communication signal received at the destination apparatus (UE) or the intermediate apparatus respectively (RN).

28. A communication system as claimed in claim 25, 26 or 27 wherein said imbalance detection means comprises a pathloss updating means operable, following receipt of said indicators from said destination apparatus (UE) and said intermediate apparatus (RN), or following a change in one or both of said indicators received by said control means, to determine a measure of the pathloss experienced by a communication signal being transmitted between the base station and the intermediate apparatus, and between the intermediate apparatus and the destination apparatus.

29. A communication system as claimed in claim 28, wherein the pathloss updating means determines the measure of the pathloss experienced by a communication signal being transmitted between the base station (NB) and the intermediate apparatus (RN) from a measure of the transmit power of the base station when that communication signal was transmitted.

30. A communication system as claimed in claim 28 or 29, wherein the pathloss updating means determines the measure of the pathloss experienced by a communication signal being transmitted between the intermediate apparatus (RN) and the destination apparatus (UE) from a measure of the transmit power of the intermediate apparatus when that communication signal was transmitted.

31. A communication system as claimed in claim 30, wherein the intermediate apparatus (RN) is operable to transmit a transmit power indicator which is indicative of a measure of a current transmit power of the intermediate apparatus to the pathloss updating means, the pathloss updating means being operable to receive said transmit power indicator and to utilise said transmit power indicator to determine the pathloss experienced by a communication signal being transmitted between the intermediate apparatus and the destination apparatus (UE).

32. A communication system as claimed in claim 31, wherein the measure of the transmit power of the intermediate apparatus (RN) is determined from i) a measure of the transmit power of the intermediate apparatus at an initial time and ii) knowledge of changes in the transmit power of the intermediate apparatus which have occurred since said initial time.

33. A communication system as claimed in any one of claims 28 to 32, wherein the calculation means is operable, following a change in the measure of the pathloss experienced between the base station and the intermediate apparatus, to calculate the change in transmit power of the base station that is required to in order to tend to balance the signal strength indicators derived at the intermediate and destination apparatus.

34. A communication system as clamed in any one of claims 25 to 33, wherein the control means (3) is operable, following a calculation of a new transmit power for the base station (NB), to determine if said new transmit power for the base station is greater than a maximum transmit power for the base station.

**35.** A communication system as claimed in claim 34 wherein if it is determined by the control means (3) that said new transmit power is greater than the maximum transmit power of the base station, the second calculation means is operable to calculate a second new transmit power for the base station which does not exceed said maximum.

**36.** A communication system as claimed in claim 35, wherein said calculation means is operable, following the calculation of a second new transmit power for the base station, to calculate a new transmit power for the intermediate apparatus that will tend to reduce or prevent an imbalance between the signal strength indicators of the destination apparatus (UE) and the intermediate apparatus (RN).

**37.** A communication system as claimed in any preceding claim, the control means further comprising command means operable to issue a command to the intermediate apparatus (RN) and/or to the base station (NB), commanding a change in the transmit power of the intermediate apparatus, and/or the transmit power of base station in accordance with the new transmit power(s) calculated by the calculation means.

**38.** A method of controlling the transmit power of one or more apparatus operable to transmit a communication signal in a multi-hop communication system, the communication system comprising a base station (NB), a destination apparatus (UE) and at least one intermediate apparatus (RN), the base station being operable to transmit a communication signal, via the or each intermediate apparatus, to the destination apparatus, the method comprising:

   i) deriving, at the destination apparatus, one or more indicators of a quality of a communication signal received at the destination apparatus;
   ii) detecting a deviation in the, or one of the, indicators derived by the destination apparatus from a desired value; and
   iii) calculating, following the detection of such a change, a new transmit power for the intermediate apparatus, or a new transmit power for the intermediate apparatus and the base station, which will tend to: a) reduce an imbalance between a measure of a quality of a communication signal received at the intermediate apparatus and a measure of the quality of a communication signal received at the destination apparatus; or b) prevent said imbalance from arising.

**39.** A method of controlling the transmit power of one or more apparatus which is operable to transmit a communication signal in a multi-hop communication system, the communication system comprising a base station (NB), a destination apparatus (UE) and at least one intermediate apparatus (RN), the base station being operable to transmit a communication signal, via the or each intermediate apparatus, to the destination apparatus, the method comprising the steps of:

   i) deriving, at each of the destination apparatus and the intermediate apparatus, an indicator of the quality of communication signal received at the destination apparatus, or at the intermediate apparatus, respectively;
   ii) detecting an imbalance between one said indicator derived by the destination apparatus and one said indicator derived by the intermediate apparatus; and
   iii) calculating, following the detection of such an imbalance, a new transmit power for the base station, which will tend to reduce said imbalance.

**40.** A base station (NB) operable to transmit a communication signal to a destination apparatus (UE), via at least one intermediate apparatus (RN), the base station comprising:

   i) receiving means (5), operable to receive an indicator from a destination apparatus and indicator deviation detection means (1), operable to detect a deviation in one said indicator from a desired value, the indicator being indicative of the quality of a communication signal received at the destination apparatus; or
   ii) receiving means (2), operable to receive a request for a new transmit power for the intermediate apparatus from the destination means; and
   iii) control means (3) having a first calculation means operable, following detection of a change in one said indicator received from said destination apparatus, or following receipt of a request from said destination apparatus, as the case may be, to calculate a new transmit power for the intermediate apparatus, or a new transmit power for the intermediate apparatus and the base station, which will tend to: a) reduce an imbalance between a measure of the quality of a communication signal received at the intermediate apparatus and a measure of a quality of a communication signal received at the destination apparatus; or b) prevent said imbalance from arising.

**41.** A base station (NB) as claimed in claim 40, wherein said control means (3) is operable to receive an input signal which allows the control means to determine if the request is due to a deviation in the variation from target indicator derived by the destination apparatus which arises due to a change in the target received signal quality set for the destination apparatus.

**42.** A base station (NB) as claimed in claim 40 or 41, the control means further comprising command means operable to issue a command to said intermediate apparatus and/or said base station, commanding a change in the transmit power of the intermediate apparatus, and/or the transmit power of base station in accordance with the new transmit power(s) calculated by the first calculation means.

**43.** A base station (NB) as claimed in claim 40, 41 or 42, wherein the receiving means (2) is further operable to receive an indicator from the destination apparatus, the indicator being indicative of a quality of a communication signal received at the destination apparatus, the base station further comprising:

i) imbalance detection means operable to detect an imbalance between one said indicator received from the destination apparatus (UE) and one said indicator received from said intermediate apparatus (RN); the control means further comprising second calculation means operable, following detection of such an imbalance, to calculate a new transmit power for the base station which will tend to reduce said imbalance.

**44.** A base station (NB) as claimed in claim 43, wherein the imbalance detection means further comprises a pathloss updating means operable, following receipt of said indicators from said destination apparatus (UE) and said intermediate apparatus (RN), or following a change in one or both of said indicators, to determine a measure of the pathloss experienced by a communication signal being transmitted between the base station and the intermediate apparatus, and between the intermediate apparatus and the destination apparatus.

**45.** A base station operable to transmit a communication signal to a destination apparatus, via at least one intermediate apparatus, the base station being provided with a control means (3) comprising:

i) receiving means (5), operable to receive one or more indicators from each of the destination apparatus and the intermediate apparatus, the, or each, indicator being indicative of a quality of a communication signal received at the destination apparatus or the intermediate apparatus respectively;
ii) imbalance detection means operable to detect an imbalance between one said indicator received from the destination apparatus and one said indicator received from the intermediate apparatus; and
iii) calculation means operable, following detection of such an imbalance, to calculate a new transmit power for the base station which will tend to reduce said imbalance.

**46.** A base station (NB) as claimed in claim 45, wherein the imbalance detection means further comprises a pathloss updating means operable, following receipt of said indicators from said destination apparatus and said intermediate apparatus, or following a change in one or both of said indicators, to determine a measure of the pathloss experienced by a communication signal being transmitted between the base station and the intermediate apparatus, and between the intermediate apparatus and the destination apparatus.

**47.** A base station (NB) as claimed in claim 45 or 46, the control means (3) further comprising command means operable to issue a command to said base station commanding a change in the transmit power of the base station in accordance with the new transmit power calculated by the calculation means.

**48.** A computer program which, when loaded into a computer, causes the computer to perform as the base station of the communication system claimed in any one of claims 1 to 37, or to perform as the base station as claimed in any one of claims 40 to 47.

**49.** A computer program as clamed in claim 48, carried by a carrier medium.

**50.** A computer program as claimed in claim 49, wherein said carrier medium is a recording medium.

**51.** A computer program as claimed in claim 49, wherein said carrier medium is a transmission medium.

**Patentansprüche**

1. Kommunikationssystem, enthaltend eine Basisstation (NB), ein Zielgerät (UE) und wenigstens ein Zwischengerät (RN), welche Basisstation betreibbar ist, um ein Kommunikationssignal über das oder jedes Zwischengerät zu dem Zielgerät zu übertragen, wobei das Zielgerät Indikatorerlangungseinrichtungen enthält, die betreibbar sind, um einen oder mehrere Indikator(en) der Qualität eines Kommunikationssignals zu erlangen, das an dem Zielgerät empfangen wurde, welches System enthält:

   i) Indikatorabweichungsdetektionseinrichtungen (1), die betreibbar sind, um eine Abweichung in dem oder einem der Indikator(en), der von dem Zielgerät erlangt wurde, von einem gewünschten Wert zu detektieren;
   ii) Steuereinrichtungen (3), die in der Basisstation vorgesehen sind, enthaltend erste Berechnungseinrichtungen, die betreibbar sind, um nachfolgend auf eine Detektion einer solchen Abweichung eine neue Übertragungsleistung für das Zwischengerät oder eine neue Übertragungsleistung für das Zwischengerät und die Basisstation zu berechnen, was dazu tendieren wird, um a) eine Unausgeglichenheit zwischen einem Maß einer Qualität eines Kommunikationssignals, das an dem Zwischengerät empfangen wurde, und einem Maß der Qualität eines Kommunikationssignals, das an dem Zielgerät empfangen wurde, zu reduzieren; oder b) ein Entstehen einer solchen Unausgeglichenheit zu verhindern.

2. Kommunikationssystem nach Anspruch 1, wobei einer der Indikatoren, der von dem Zielgerät (UE) erlangt wurde, ein Maß der Stärke eines Kommunikationssignals enthält, das an dem Zielgerät empfangen wurde.

3. Kommunikationssystem nach Anspruch 1 oder 2, wobei einer der Indikatoren, der von dem Zielgerät (UE) erlangt wurde, ein Maß des Signal-zu-Störung-plus-Rauschen-Verhältnisses (SINR) eines Kommunikationssignals enthält, das an dem Zielgerät empfangen wurde.

4. Kommunikationssystem nach einem der Ansprüche 1, 2 oder 3, wobei einer der Indikatoren, der von dem Zielgerät (UE) erlangt wurde, ein Maß der Variation der Qualität eines Kommunikationssignals, das an dem ZielgeräL empfangen wurde, von einer Sollempfangssignalqualität enthält, die für das Zielgerät eingestellt ist.

5. Kommunikationssystem nach einem der vorhergehenden Ansprüche, wobei das Unausgeglichenheit eine Differenz zwischen einem Maß des Signal-zu-Störung-plus-Rauschen-Verhältnisses eines Kommunikationssignals, das an dem Zielgerät (UE) empfangen wurde, und einem Maß des Signal-zu-Störung-plus-Rauschen-Verhältnisses eines Kommunikationssignals enthält, das an dem Zwischengerät (RN) empfangen wurde.

6. Kommunikationssystem nach einem der vorhergehenden Ansprüche, wobei die Indikatorabweichungsdetektionseinrichtungen (1) in dem Zielgerät (UE) vorgesehen sind, und wobei das Zielgerät ferner Anforderungsübertragungseinrichtungen enthält, die betreibbar sind, um nachfolgend auf eine Detektion einer Abweichung durch die tndikatorabweichungsdetektionseinrichtungen eine Anforderung zu den ersten Berechnungseinrichtungen (3) entweder direkt oder über das Zwischengerät für die Berechnung einer neuen Übertragungsleistung für das Zwischengerät zu übertragen, was dazu tendieren wird, um a) eine Unausgeglichenheit zwischen einem Maß einer Qualität eines Kommunikationssignals, das an dem Zwischengerät (RN) empfangen wurde, und einem Maß der Qualität des Kommunikationssignals zu reduzieren, das an dem Zielgerät empfangen wurde; oder b) ein Entstehen der Unausgeglichenheit zu verhindern.

7. Kommunikationssystem nach Anspruch 6, wobei die ersten Berechnungseinrichtungen (3) betreibbar sind, um eine Anforderung zu empfangen, die von dem Zielgerät übertragen wurde, und wobei die ersten Berechnungseinrichtungen betreibbar sind, um nachfolgend auf einen Empfang einer solchen Anforderung durch die Steuereinrichtungen (3) eine neue Übertragungsleistung für das Zwischengerät (RN) zu berechnen, was dazu tendieren wird, die Anforderung zu erfüllen.

8. Kommunikationssystem nach einem der vorhergehenden Ansprüche, wobei die Steuereinrichtungen (3) betreibbar sind, um nachfolgend auf eine Berechnung einer neuen Übertragungsleistung für das Zwischengerät (RN) durch die ersten Berechnungseinrichtungen zu bestimmen, ob die neue Übertragungsleistung des Zwischengerätes größer als eine maximale Übertragungsleistung des Zwischengerätes (RN) ist.

9. Kommunikationssystem nach Anspruch 8, wobei, wenn durch die Steuereinrichtungen (3) bestimmt ist, dass die neue Übertragungsleistung größer als die maximale Übertragungsleistung ist, die ersten Berechnungseinrichtungen für das Zwischengerät (RN) eine zweite neue Übertragungsleistung berechnen, die die maximale Übertragungsleistung des Zwischengerätes nicht übersLeigt.

10. Kommunikationssystem nach einem der Ansprüche 6 bis 9, wobei die Steuereinrichtungen (3) betreibbar sind, um ein Eingabesignal zu empfangen, das es den Steuereinrichtungen erlaubt, zu bestimmen, ob die Anforderung an einer Abweichung bei einer Variation vom Sollindikator liegt, der von dem Zielgerät (UE) erlangt wurde, welche auf Grund einer Änderung bei der Sollempfangssignalqualität entsteht, die für das Zielgerät eingestellt ist.

11. Kommunikationssystem nach Anspruch 10, wobei, falls bestimmt wird, dass die Anforderung auf Grund einer Änderung bei der Sollempfangssignalqualität des Zielgerätes (UE) entsteht, die ersten Derechnungseinrichtungen (3) ferner betreibbar sind, um eine neue Übertragungsleistung für die Basisstation (NB) basierend auf der neuen Übertragungsleistung zu berechnen, die für das Zwischengerät (RN) berechnel wurde, um **dadurch** dazu zu tendieren, ein Entstehen einer Unausgeglichenheit zwischen einem Maß einer Qualität eines Kommunikationssignals, das an dem Zwischengerät empfangen wurde, und einem Maß der Qualität eines Kommunikationssignals zu verhindert, das an dem Zielgerät empfangen wurde.

12. Kommunikationssystem nach Anspruch 11, wobei die Steuereinrichtungen (3) betreibbar sind, um nachfolgend auf eine Berechnung einer neuen Übertragungsleistung für die Basisstation zu bestimmen, ob die neue Übertragungsleistung für die Basisstation (NB) größer als eine maximale Übertragungsleistung für die Basisstation ist.

13. Kommunikationssystem nach Anspruch 12, wobei, wenn durch die Steuereinrichtungen (3) bestimmt ist, dass die neue Übertragungsleistung größer als die maximale Obertragungsleistung der Basisstation (NB) ist, die ersten Berechnungseinrichtungen eine zweite neue Übertragungsleistung für die Basisstation berechnen, die das Maximum nicht übersteigt.

14. Kommunikationssystem nach Anspruch 13, wobei die ersten Berechnungseinrichtungen betreibbar sind, um nachfolgend auf die Berechnung einer zweiten neuen Übertragungsleistung für die Basisstation eine zweite neue Übertragungsleistung für das Zwischengerät zu berechnen, was dazu tendieren wird, um ein Entstehen einer Unausgeglichenheit zu verhindern.

15. Kommunikationssystem nach einem der vorhergehenden Ansprüche, wobei das Zwischengerät (RN) Indikatorerlangungseinrichtungen enthält, die betreibbar sind, um einen oder mehrere Indikator(en) der Qualität eines Kommunikationssignals zu erlangen, das an dem Zwischengerat empfangen wurde, wobei das Zwischengerät und das Zielgerät jeweils betreibbar sind, um einen der **dadurch** erlangten Indikatoren zu den Steuereinrichtungen (3) zu übertragen, welche Steuereinrichtungen ferner enthalten:

    i) Unausgeglichenheitsdetektionseinrichtungen, die betreibbar sind, um eine Unausgeglichenheit zwischen einem der Indikatoren, der von dem Zielgerät erlangt wurde, und einem der Indikatoren zu detektieren, der von dem Zwischengerät erlangt wurde; und
    ii) zweite Berechnungseinrichtungen, die betreibbar sind, um nachfolgend auf die Detektion einer solchen Unausgeglichenheit eine neue Übertragungsleistung für die Basisstation zu berechnen, was dazu tendieren wird, um die Unausgeglichenheit zu reduzieren.

16. Kommunikationssystem nach Anspruch 15, wobei einer der Indikatoren, der von dem Zwischengerät (RN) und dem Zielgerät (UE) erlangt wurde, ein Maß der Stärke eines Kommunikationssignals enthält, das an dem Zielgerät oder Zwischengerät empfangen wurde, je nach Lage des Falles.

17. Kommunikationssystem nach Anspruch 15 oder 16, wobei einer der Indikatoren, der von dem Zwischengerät (RN) und dem Zielgerät (UE) erlangt wurde, ein Maß des Signalzu-Störung-plus-Rauschen-Verhältnisses (SINR) eines Kommunikationssignals enthält, das an dem Zielgerät oder dem Zwischengerät empfangen wurde, je nach Lage des Falles.

18. Kommunikationssystem nach Anspruch 16 oder 17, wobei die Unausgeglichenheitsdetektion Pfadverlustaktualisierungseinrichtungen enthält, die betreibbar sind, um nachfolgend auf den Empfang der Indikatoren von sowohl dem Zielgerät (UE) als auch dem Zwischengerät (RN) oder nachfolgend auf eine Änderung bei einem oder beiden der Indikatoren, die von den Steuereinrichtungen (3) empfangen wurden, ein Maß des Pfadverlustes zu bestimmen, den ein Kommunikationssignal erfuhr, das zwischen der Basisstation (NB) und dem Zwischengerät und zwischen dem Zwischengerät und dem Zielgerät übertragen wird.

19. Kommunikationssystem nach Anspruch 18, wobei die Pfadverlustaktualisierungseinrichtungen das Maß des Pfadverlustes, den ein Kommunikationssignal erfuhr, das zwischen der Basisstation (NB) und dem Zwischengerät (RN) übertragen wurde, von einem Maß der Übertragungsleistung der Basisstation bestimmen, wenn jenes Kommunikationssignal übertragen wurde.

20. Kommunikationssystem nach Anspruch 18 oder 19, wobei die Pfadverlustaktualisierungseinrichtungen das Maß des Pfadverlustes, den ein Kommunikationssignal erfuhr, das zwischen dem Zwischengerät (RN) und dem Zielgerät (UE) übertragen wurde, von einem Maß der Übertragungsleistung des Zwischengerätes bestimmen, wenn jenes Kommunikationssignal übertragen wurde.

21. Kommunikationssystem nach Anspruch 20, wobei das Zwischengerät (RN) betreibbar ist, um einen Übertragungsleistungsindikator, der für ein Maß einer gegenwärtigen Übertragungsleistung des Zwischengerätes indikativ ist, zu den Pfadverlustaktualisierungseinrichtungen zu übertragen, welche Pfadverlustaktualisierungseinrichtungen betreibbar sind, um den Übertragungsleistungsindikator zu empfangen und den Übertragungsleistungsindikator zu verwenden, um den Pfadverlust zu bestimmen, den ein Kommunikationssignal erfuhr, das zwischen dem Zwischengerät und dem Zielgerät (UE) übertragen wurde.

22. Kommunikationssystem nach Anspruch 18, wobei die Kenntnis von der Übertragiingsleistung des Zwischengerätes (RN) bestimmt wird, von i) einem Maß der übertragungsleistung des Zwischengerätes zu einer Anfangszeit und ii) der Kenntnis der Änderungen in der Übertragungsleistung des Zwischengerätes, die seit der Anfangszeit aufgetreten sind.

23. Kommunikationssystem nach einem der Ansprüche 18 bis 22 in Abhängigkeit von Anspruch 6, wobei in Abwesenheit einer Anforderung für eine Änderung bei der Übertragungsleistung des Zwischengerätes (RN) von dem Zielgerät (UE) und nachfolgend auf eine Änderung beim Maß des Pfadverlustes, der zwischen dem Zwischengerät und dem Zielgerät erfahren wurde, bestimmt durch die Pfadverlustaktualisierungseinrichtungen, die zweiten Berechnungseinrichtungen betreibbar sind, um die Änderung in der Obertragungsleistung der Basisstation (NB) zu berechnen, die erforderlich ist, um dazu zu tendieren, ein Maß der Qualität eines Kommunikationssignals, das an dem Zwischengerät empfangen wurde, und ein Maß der Qualität eines Kommunikationssignals auszugleichen, das an dem Zielgerät empfangen wurde.

24. Kommunikationssystem nach einem der Ansprüche 18 bis 22 in Abhängigkeit von Anspruch 10, wobei das Eingabesignal einen Indikator des Pfadverlustes enthält, der zwischen dem Zwischengerät (RN) und dem Zielgerät (UE) erfahren wurde, wie er durch die Pfadverlustaktualisierungseinrichtungen bestimmt wurde.

25. Kommunikationssystem, enthaltend eine Basisstation (NB), ein Zielgerät (UE) und wenigstens ein Zwischengerät (RN), welche Basisstation betreibbar ist, um ein Kommunikationssignal über das oder jedes Zwischengerät zu dem Zielgerät zu übertragen, welche Basisstation Kontrolleinrichtungen (3) enthält, wobei das Zielgerät und das Zwischengerät enthalten: Indikatorerlangungseinrichtungen, die betreibbar sind, um einen oder mehrere Indikator(en) der Qualität eines Kommunikationssignals zu erlagen, das an dem Zielgerät bzw. dem Zwischengerät empfangen wurde, wobei das Zwischengerät und das Zielgerät betreibbar sind, um die Indikatoren zu den Steuereinrichtungen zu übertragen, welche Steuereinrichtungen enthalten:

   i) Unausgeglichenheitsdetektionseinrichtungen, die betreibbar sind, um eine Unausgeglichenheit zwischen einem der Indikatoren, der von dem Zielgerät erlangt wurde, und einem der Indikatoren zu detektieren, der von dem Zwischengerät erlangt wurde; und
   ii) Berechnungseinrichtungen, die betreibbar sind, um nachfolgend auf die Detektion einer solchen Unausgeglichenheit eine neue Ubertragungsleistung für die Basisstation zu berechnen, was dazu tendieren wird, die Unausgeglichenheit zu reduzieren.

26. Kommunikationssystem nach Anspruch 25, wobei einer der Indikatoren, der von dem Zwischengerät (RN) und dem Zielgerät (UE) erlangt wurde, ein Maß der Stärke eines Kommunikationssignals enthält, das an dem Zielgerät bzw. dem Zwischengerät empfangen wurde.

27. Kommunikationssystem nach Anspruch 25 oder 26, wobei einer der Indikatoren, der von dem Zwischengerät und dem Zielgerät erlangt wurde, ein Maß des Signal-zu-Störungplus-Rauschen-Verhältnisses (SINR) eines Kommunikationssignals enthält, das an dem Zielgerät (UE) bzw. dem Zwischengerät (RN) empfangen wurde.

28. Kommunikationssystem nach Anspruch 25, 26 oder 27, wobei die Unausgeglichenheitsdetektionseinrichtungen Pfadverlustaktualisierungseinrichtungen enthalten, die betreibbar sind, um nachfolgend auf einen Empfang der Indikatoren von dem Zielgerät (UE) und dem Zwischengerät (RN) oder nachfolgend auf eine Änderung bei einem oder beiden der Indikatoren, die von den Steuereinrichtungen empfangen wurden, ein Maß des Pfadverlustes zu bestimmen, den ein Kommunikationssignal erfuhr, das zwischen der Basisstation und dem Zwischengerät und zwischen dem Zwischengerät und dem Zielgerät übertragen wird.

29. Kommunikationssystem nach Anspruch 28, wobei die Pfadverlustaktualisierungseinrichtungen das Maß des Pfadverlustes, den ein Kommunikationssignal erfuhr, das zwischen der Basisstation (NB) und dem Zwischengerät (RN) übertragen wird, von einem Maß der Übertragungsleistung der Basisstation bestimmen, wenn jenes Kommunikationssignal übertragen wurde.

30. Kommunikationssystem nach Anspruch 28 oder 29, wobei die Pfadverlustaktualisierungseinrichtungen das Maß des Pfadverlustes, den ein Kommunikationssignal erfuhr, das zwischen dem Zwischengerät (RN) und dem Zielgerät (UE) übertragen wurde, von einem Maß der Übertragungsleistung des Zwischengerätes bestimmen, wenn jenes Kommunikationssignal übertragen wurde.

31. Kommunikationssystem nach Anspruch 30, wobei das Zwischengerät (RN) betreibbar ist, um einen Übertragungsleistungsindikator, der für ein Maß einer gegenwärtigen Übertragungsleistung des Zwischengerätes indikativ ist, zu den Pfadverlustaktualisierungseinrichtungen zu übertragen, welche Pfadverlustaktualisierungseinrichtungen betreibbar sind, um den Übertragungsleistungsindikator zu empfangen und um den übertragungsleistungsindikator zu verwenden, um den Pfadverlust zu bestimmen, den ein Kommunikationssignal erfuhr, das zwischen dem Zwischengerät und dem Zielgerät (UE) übertragen wird.

32. Kommunikationssystem nach Anspruch 31, wobei das Maß der Übertragungsleistung des Zwischengerätes (RN) bestimmt wird von i) einem Maß der Übertragungsleistung des Zwischengerätes zu einer Anfangszeit und ii) der Kenntnis der Änderungen in der Übertragungsleistung des Zwischengerätes, die seit der Anfangszeit aufgetreten sind.

33. Kommunikationssystem nach einem der Ansprüche 28 bis 32, wobei die Berechnungseinrichtungen betreibbar sind, um nachfolgend auf eine Änderung beim Maß des Pfadverlustes, der zwischen der Basisstation und dem Zwischengerät erfahren wurde, die Änderung in der Übertragungsleistung der Basisstation zu berechnen, die erforderlich ist, um dazu zu tendieren, die Signalstärkenindikatoren, die an dem Zwischen- und Zielgerät erlangt werden, auszugleichen.

34. Kommunikationssystem nach einem der Ansprüche 25 bis 33, wobei die Steuereinrichtungen (3) betreibbar sind, um nachfolgend auf eine Berechnung einer neuen Übertragungsleistung für die Basisstation (NB) zu bestimmen, ob die neue Übertragungsleistung für die Basisstation größer als eine maximale Übertragungsleistung für die Basisstation ist.

35. Kommunikationssystem nach Anspruch 34, wobei, falls von den Steuereinrichtungen (3) bestimmt wurde, dass die neue Übertragungsleistung größer als die maximale Übertragungsleistung der Basisstation ist, die zweiten Berechnungseinrichtungen betreibbar sind, um eine zweite neue Übertragungsleistung für die Basisstation zu berechnen, die das Maximum nicht übersteigt.

36. Kommunikationssystem nach Anspruch 35, wobei die Berechnungseinrichtungen betreibbar sind, um nachfolgend auf die Berechnung einer zweiten neuen Übertragungsleistung für die Basisstation eine neue Übertragungsleistung für das Zwischengerät zu berechnen, was dazu tendieren wird, eine Unausgeglichenheit zwischen den Signalstärkenindikatoren des Zielgerätes (UE) und des Zwischengerätes (RN) zu reduzieren oder zu verhindern.

37. Kommunikationssystem nach einem der vorhergehenden Ansprüche, wobei die Steuereinrichtungen ferner Befehlseinrichtungen enthalten, die betreibbar sind, um einen Befehl zu dem Zwischengerät (RN) und/oder der Basisstation (MB) auszugeben, der eine Änderung in der Übertragungsleistung des Zwischengerätes und/oder der Übertragungsleistung des Basisstation gemäß der/den neuen Übertragungsleistung(en) befiehlt, die von den Berechnungseinrichtungen berechnet wurde(n).

38. Verfahren zum Steuern der Übertragungsleistung von einem oder mehreren Gerät(en), das/die betreibbar ist/sind, um ein Kommunikationssignal in einem Mehrfachsprungkommunkationssystem zu übertragen, welches Kommunikationssystem eine Basisstation (NB), ein Zielgerät (UE) und wenigstens ein Zwischengerat (RN) enthält, welche Basisstation betreibbar ist, um ein Kommunikationssignal. über das oder jedes Zwischengerät zu dem Zielgerät zu übertragen, welches Verfahren enthält:

i) an dem Zielgerät Erlangen von einem oder mehreren Indikator(en) einer Qualität eines Kommunikationssignals, das an dem Zielgerät empfangen wurde;

ii) Detektieren einer Abweichung in dem oder einem von dem Indikator(en) der von dem Zielgerät erlangt wurde, von einem gewünschtem Wert; und

iii) Berechnen einer neuen Übertragungsleistung für das Zwischengerät oder einer neuen Übertragungsleistung für das Zwischengerät und die Basisstation nachfolgend auf die Detektion einer solchen Änderung, was dazu tendieren wird, um: a) eine Unausgeglichenheit zwischen einem Maß einer Qualität eines Kommunikationssignals, das an dem Zwischengerät empfangen wurde, und einem Maß der Qualität eines Kommunikationssignals zu reduzieren, das an dem Zielgerät empfangen wurde; oder b) ein Entstehen der Unausgeglichenheit zu verhindern.

39. Verfahren zum Steuern der Übertragungsleistung von einem oder mehreren Gerät(en), das/die betreibbar ist/sind, um ein Kommunikationssignal in einem Mehrfachsprungkommunikationssystem zu übertragen, welches Kommunikationssystem eine Basisstation (NB), ein Zielgerät (UE) und wenigstens ein Zwischengerät (RN) enthält, welche Basisstation betreibbar ist, um ein Kommunikationssignal über das oder jedes Zwischengerät zu dem Zielgerät zu übertragen, welches Verfahren die Schritte enthält:

i) an dem Zielgerät und dem Zwischengerät einen Indikator der Qualität des Kommunikationssignals Erlangen, das an dem Zielgerät bzw. an dem Zwischengerät empfangen wurde;

ii) Detektieren einer Unausgeglichenheit zwischen einem der Indikatoren, der von dem Zielgerät erlangt wurde, und einem der Indikatoren, der von dem Zwischengerät erlangt wurde; und

iii) Berechnen einer neuen Übertragungsleistung für die Basisstation nachfolgend auf die Detektion einer solchen Unausgeglichenheit, was dazu tendieren wird, um die Unausgeglichenheit zu reduzieren.

40. Basisstation (NB), die betreibbar ist, um ein Kommunikationssignal zu einem Zielgerät (UE) über wenigstens ein Zwischengerät (RN) zu übertragen, welche Basisstation enthält:

i) Empfangseinrichtungen (5), die betreibbar sind, um einen Indikator von einem Zielgerät zu empfangen, und Indikatorabweichungsdetektionseinrichtungen (1), die betreibbar sind, um eine Abweichung bei einem der Indikatoren von einem gewünschten wert zu detektieren, welcher Indikator für die Qualität eines Kommunikationssignals indikativ ist, das an dem Zielgerät empfangen wurde; oder

ii) Empfangseinrichtungen (2), die betreibbar sind, um eine Anforderung für eine neue Übertragungsleistung für das Zwischengerät von den Zieleinrichtungen zu empfangen; und

iii) Steuereinrichtungen (3), die erste Berechnungseinrichtungen haben, die je nach Lage des Falles nachfolgend auf eine Detektion einer Änderung bei einem der Indikatoren, die von dem Zielgerät empfangen wurden, oder nachfolgend auf einem Empfang einer Anforderung von dem Zielgerät eine neue Ubertragungsleistung für das Zwischengerät oder eine neue übertragungsleistung für das Zwischengerät und die Basisstation zu berechnen, was dazu tendieren wird, um: a) eine Unausgeglichenheit zwischen einem Maß der Qualität eines Kommunikationssignals, das an dem Zwischengerät empfangen wurde, und einem Maß einer Qualität eines Kommunikationssignals zu reduzieren, das an dem Zielgerät empfangen wurde; oder b) ein Entstehen der Unausgeglichenheit zu verhindern.

41. Basisstation (NB) nach Anspruch 40, wobei die Steuereinrichtungen (3) betreibbar sind, um ein Eingabesignal zu empfangen, das es den Steuereinrichtungen gestattet, zu bestimmen, ob die Anforderung an einer Abweichung in der Variation vom Sollindikator liegt, der von dem Zielgerät erlangt wurde, was aufgrund einer Änderung in der Sollempfangssignalqualirät entsteht, die für das Zielgerät eingestellt ist.

42. Basisstation (NB) nach Anspruch 40 oder 41, wobei die Steuereinrichtungen ferner Befehlseinrichtungen enthalten, die betreibbar sind, um einen Befehl zu dem Zwischengerät und/oder der Basisstation auszugeben, der eine Änderung in der Übertragungsleistung des Zwischengerätes und/oder der Übertragungsleistung der Basisstation gemäß der/den neuen Übertragungsleistung(en) befiehlt, die von den ersten Berechnungseinrichtunqen berechnet wurde(n).

43. Basisstation (NB) nach Anspruch 40, 41 oder 42, wobei die Empfangseinrichtungen (2) ferner betreibbar sind, um einen Indikator von dem Zielgerät zu empfangen, welcher Indikator für eine QualitäL eines Kommunikationssignals indikativ ist, das an dem Zielgerät empfangen wurde, welche Basisstation ferner enthält:

i) Unausgeglichenheitsdetektionseinrichtungen, die betreibbar sind, um eine Unausgeglichenheit zwischen einem der Indikatoren, der von dem Zielgerät (UE) empfangen wurde, und einem der Indikatoren zu detektieren, der von dem Zwischengerät (RN) empfangen wurde; welche Steuereinrichtungen ferner zweite Berechnungseinrichtunqen enthalten, die betreibbar sind, um nachfolgend auf eine Detektion einer solcher Unausgeglichenheit eine neue Übertragungsleistung für die Basisstation zu berechnen, was dazu tendieren wird, um die Unausgeglichenheit zu reduzieren.

44. Basisstation (NB) nach Anspruch 43, wobei die Unausgeglichenheitsdetektionseinrichtungen ferner Pfadverlustaktualisierungseinrichtungen enthalten, die betreibbar sind, um nachfolgend auf den Empfang der Indikatoren von dem Zielgerät (UE) und dem Zwischengerät (RN) oder nachfolgend auf eine Änderung bei einem oder beiden der Indikatoren ein Maß des Pfadverlustes zu bestimmen, den ein Kommunikationssignal erfuhr, das zwischen der Basisstation und dem Zwischengerät und zwischen dem Zwischengerät und dem Zielgerät übertragen wird.

45. Basisstation, die betreibbar ist, um ein Kommunikationssignal zu einem Zielgerät über wenigstens ein Zwischengerät zu übertragen, welche Basisstation mit Steuereinrichtungen (3) versehen ist, die enthalten:

i) Empfangseinrichtungen (5) die betreibbar sind, um einen oder mehrere Indikator(en) von dem Zielgerät und dem Zwischengerät zu empfangen , wobei der oder jeder Indikator für eine Qualität des Kommunikationssignals indikativ ist, das an dem Zielgerät bzw. dem Zwischengerät empfangen wird;
ii) Unausgeglichenheitsdetektionseinrichtungen, die betreibbar sind, um eine Unausgeglichenheit zwischen einem der Indikatoren, der von dem Zielgerät empfangen wurde, und einem der Indikatoren zu detektieren, der von dem Zwischengerät empfangen wurde; und
iii) Berechnungseinrichtungen, die betreibbar sind, um nachfolgend auf eine Detektion einer solchen Unausgeglichenheit eine neue Übertragungsleistung für die Basisstation zu berechnen, was dazu tendieren wird, um die Unausgeglichenheit zu reduzieren.

46. Basisstation (NB) nach Anspruch 45, wobei die Unausgeglichenheitsdetektionseinrichtungen ferner Pfadverlustaktualisierungseinrichtungen enthalten, die betreibbar sind, um nachfolgend auf den Empfang der Indikatoren von dem Zielgerät und dem Zwischengerät oder nachfolgend auf eine Änderung bei einem oder beiden der Indikatoren ein Maß des Pfadverlustes zu bestimmen, den ein Kommunikationssignal erfuhr, das zwischen der Basisstation und dem Zwischengerät und zwischen dem Zwischengerät und dem Zielgerät übertragen wird.

47. Basisstation (NB) nach Anspruch 45 oder 46, wobei die Steuereinrichtungen (3) ferner Befehlseinrichtungen enthalten, die betreibbar sind, um einen Befehl zu der Basisstation auszugeben, der eine Änderung in der Übertragungsleistung der Basisstation gemäß der neuen Übertragungsleistung zu befehlen, die von den Berechnungseinrichtungen berechnet wurde.

48. Computerprogramm, das, wenn es in einen Computer geladen wurde, den Computer veranlasst, als die Basisstation des Kommunikationssystems zu arbeiten, das in einem der Ansprüche 1 bis 37 beansprucht ist, oder als die Basisstation zu arbeiten, die in einem der Ansprüche 40 bis 47 beansprucht ist.

49. Computerprogramm nach Anspruch 48, getragen von einem Trägermedium.

50. Computerprogramm nach Anspruch 49, wobei das Trägermedium ein Aufzeichnungsmedium ist.

51. Computerprogramm nach Anspruch 49, wobei das Trägermedium ein Übertragungsmedium ist.

**Revendications**

1. Système de communication comprenant une station de base (NB), un appareil de destination (UE) et au moins un appareil intermédiaire (RN), la station de base pouvant être utilisée pour transmettre un signal de communication, via l'appareil ou chaque appareil intermédiaire, à l'appareil de destination, dans lequel l'appareil de destination comprend des moyens de dérivation d'un indicateur pouvant être utilisés pour dériver un ou plusieurs indicateurs de la qualité d'un signal de communication reçu au niveau de l'appareil de destination, le système comprenant :

i) des moyens de détection de la déviation d'un indicateur (1), pouvant être utilisés pour détecter une déviation dans l'indicateur, ou l'un des indicateurs dérivés par l'appareil de destination d'une valeur souhaitée ;

ii) des moyens de contrôle (3), fournis dans la station de base, comprenant des premiers moyens de calcul pouvant être utilisés, après la détection d'une telle déviation, pour calculer une nouvelle puissance de transmission pour l'appareil intermédiaire, ou une nouvelle puissance de transmission pour l'appareil intermédiaire et la station de base, qui tendra à a) réduire un déséquilibre entre une mesure d'une qualité d'un signal de communication reçu au niveau de l'appareil intermédiaire et une mesure de la qualité d'un signal de communication reçu au niveau de l'appareil de destination ; ou b) empêcher qu'un tel déséquilibre ne survienne.

2. Système de communication selon la revendication 1, dans lequel ledit indicateur dérivé par ledit appareil de destination (UE) comprend une mesure de l'intensité d'un signal de communication reçu au niveau de l'appareil de destination.

3. Système de communication selon la revendication 1 ou 2, dans lequel ledit indicateur dérivé par ledit appareil de destination (UE) comprend une mesure du rapport signal à interférence plus bruit (SINR) d'un signal de communication reçu au niveau de l'appareil de destination.

4. Système de communication selon l'une quelconque des revendications 1, 2 ou 3, dans lequel ledit indicateur dérivé par ledit appareil de destination (UE) comprend une mesure de la variation de la qualité d'un signal de communication reçu au niveau de l'appareil de destination à partir d'une qualité du signal reçu cible établie pour l'appareil de destination.

5. Système de communication selon l'une quelconque des revendications précédentes, dans lequel ledit déséquilibre comprend une différence entre une mesure du rapport signal à interférence plus bruit d'un signal de communication reçu au niveau de l'appareil de destination (UE) et une mesure du rapport signal à interférence plus bruit d'un signal de communication reçu au niveau de l'appareil intermédiaire (RN).

6. Système de communication selon l'une quelconque des revendications précédentes, dans lequel les moyens de détection de la déviation d'un indicateur (1) sont fournis dans l'appareil de destination (UE), et dans lequel l'appareil de destination comprend en outre des moyens de transmission de demande pouvant être utilisés, après la détection d'une déviation par lesdits moyens de détection de la déviation d'un indicateur, pour transmettre une demande aux premiers moyens de calcul (3), directement ou via l'appareil intermédiaire, pour le calcul d'une nouvelle puissance de transmission pour l'appareil intermédiaire qui tendra à a) réduire un déséquilibre entre une mesure d'une qualité d'un signal de communication reçu au niveau de l'appareil intermédiaire (RN) et une mesure de la qualité d'un signal de communication reçu au niveau de l'appareil de destination ; ou b) empêcher que ledit déséquilibre ne survienne.

7. Système de communication selon la revendication 6, dans lequel les premiers moyens de calcul (3) peuvent être utilisés pour recevoir une demande transmise par ledit appareil de destination et dans lequel lesdits premiers moyens de calcul peuvent être utilisés, après la réception d'une telle demande par les moyens de contrôle (3), de calculer une nouvelle puissance de transmission pour l'appareil intermédiaire (RN) qui tendra à satisfaire à la demande.

8. Système de communication selon l'une quelconque des revendications précédentes, dans lequel les moyens de contrôle (3) peuvent être utilisés, après un calcul d'une nouvelle puissance de transmission pour l'appareil intermédiaire (RN) par lesdits premiers moyens de calcul, pour déterminer si ladite nouvelle puissance de transmission de l'appareil intermédiaire est supérieure à une puissance de transmission supérieure à une puissance de transmission maximum de l'appareil intermédiaire (RN).

9. Système de communication selon la revendication 8, dans lequel s'il est déterminé par les moyens de contrôle (3) que ladite nouvelle puissance de transmission est supérieure à ladite puissance de transmission maximum, les premiers moyens de calcul calculent une seconde nouvelle puissance de transmission pour l'appareil intermédiaire (RN) qui ne dépasse pas ladite puissance de transmission maximum de l'appareil intermédiaire.

10. Système de communication selon l'une quelconque des revendications 6 à 9, dans lequel les moyens de contrôle (3) peuvent être utilisés pour recevoir un signal d'entrée qui permet aux moyens de contrôle de déterminer si la demande est due à une déviation dans une variation de l'indicateur cible dérivé par l'appareil de destination (UE) qui survient en raison d'un changement de la qualité du signal reçu cible établie pour l'appareil de destination.

11. Système de communication selon la revendication 10 dans lequel, s'il est déterminé que la demande survient en raison d'un changement de la qualité du signal reçu cible de l'appareil de destination (UE), les premiers moyens de calcul (3) peuvent être utilisés pour calculer une nouvelle puissance de transmission pour la station de base (NB), sur la base de la nouvelle puissance de transmission calculée pour l'appareil intermédiaire (RN), pour ainsi tendre à empêcher qu'un déséquilibre entre une mesure d'une qualité d'un signal de communication reçu au niveau de l'appareil intermédiaire et une mesure de la qualité d'un signal de communication reçu au niveau de l'appareil de destination ne survienne.

**12.** Système de communication selon la revendication 11, dans lequel les moyens de contrôle (3) peuvent être utilisés, après un calcul d'une nouvelle puissance de transmission pour la station de base, pour déterminer si ladite nouvelle puissance de transmission pour la station de base (NB) est supérieure à une puissance de transmission maximum pour la station de base.

**13.** Système de communication selon la revendication 12, dans lequel s'il est déterminé par les moyens de contrôle (3) que ladite nouvelle puissance de transmission est supérieure à la puissance de transmission maximum de la station de base (NB), les premiers moyens de calcul calculent une seconde nouvelle puissance de transmission pour la station de base qui ne dépasse pas ledit maximum.

**14.** Système de communication selon la revendication 13, dans lequel lesdits premiers moyens de calcul peuvent être utilisés, après le calcul d'une seconde nouvelle puissance de transmission pour la station de base, pour calculer une seconde nouvelle puissance de transmission pour l'appareil intermédiaire qui tendra à empêcher qu'un déséquilibre ne survienne.

**15.** Système de communication selon l'une quelconque des revendications précédentes, dans lequel ledit appareil intermédiaire (RN) comprend des moyens de dérivation d'un indicateur pouvant être utilisés pour dériver un ou plusieurs indicateurs de la qualité d'un signal de communication reçu au niveau de l'appareil intermédiaire, dans lequel ledit appareil intermédiaire et ledit appareil de destination peuvent être utilisés pour transmettre ledit indicateur dérivé ainsi vers lesdits moyens de contrôle (3), les moyens de contrôle comprenant en outre :

i) des moyens de détection de déséquilibre pouvant être utilisés pour détecter un déséquilibre entre ledit indicateur dérivé par l'appareil de destination et ledit indicateur dérivé par l'appareil intermédiaire ; et
ii) les seconds moyens de calcul pouvant être utilisés, après la détection d'un tel déséquilibre, pour calculer une nouvelle puissance de transmission pour la station de base qui tendra à réduire ledit déséquilibre.

**16.** Système de communication selon la revendication 15, dans lequel ledit indicateur dérivé par chaque élément parmi l'appareil intermédiaire (RN) et l'appareil de destination (UE) comprend une mesure de l'intensité d'un signal de communication reçu au niveau de l'appareil de destination ou de l'appareil intermédiaire, selon les circonstances.

**17.** Système de communication selon la revendication 15 ou 16, dans lequel ledit indicateur dérivé par chaque élément parmi ledit appareil intermédiaire (RN) et ledit appareil de destination (UE) comprend une mesure du rapport signal à interférence plus bruit (SINR) d'un signal de communication reçu au niveau de l'appareil de destination ou de l'appareil intermédiaire, selon les circonstances.

**18.** Système de communication selon la revendication 16 ou 17, dans lequel ladite détection de déséquilibre comprend des moyens de mise à jour de perte de chemin pouvant être utilisés, après la réception desdits indicateurs à la fois dudit appareil de destination (UE) et dudit appareil intermédiaire (RN), ou après un changement d'un ou de deux desdits indicateurs reçus par lesdits moyens de contrôle (3), pour déterminer une mesure de la perte de chemin connue par un signal de communication transmis entre la station de base (NB) et l'appareil intermédiaire, et entre l'appareil intermédiaire et l'appareil de destination.

**19.** Système de communication selon la revendication 18, dans lequel les moyens de mise à jour de perte de chemin déterminent la mesure de la perte de chemin connue par un signal de communication transmis entre la station de base (NB) et l'appareil intermédiaire (RN) à partir d'une mesure de la puissance de transmission de la station de base quand ce signal de communication a été transmis.

**20.** Système de communication selon la revendication 18 ou 19, dans lequel les moyens de mise à jour de perte de chemin déterminent la mesure de la perte de chemin connue par un signal de communication transmis entre l'appareil intermédiaire (RN) et l'appareil de destination (UE) à partir d'une mesure de la puissance de transmission de l'appareil intermédiaire quand ce signal de communication a été transmis.

**21.** Système de communication selon la revendication 20, dans lequel l'appareil intermédiaire (RN) peut être utilisé pour transmettre un indicateur de puissance de transmission qui est indicatif d'une mesure d'une puissance de transmission courante de l'appareil intermédiaire aux moyens de mise à jour de perte de chemin, les moyens de mise à jour de perte de chemin pouvant être utilisés pour recevoir ledit indicateur de puissance de transmission pour déterminer la perte de chemin connue par un signal de communication transmis entre l'appareil intermédiaire et l'appareil de destination (UE).

**22.** Système de communication selon la revendication 18, dans lequel la connaissance de la puissance de transmission de l'appareil intermédiaire (RN) est déterminée à partir i) d'une mesure de la puissance de transmission de l'appareil intermédiaire au niveau d'un temps initial et ii) de la connaissance des changements de la puissance de transmission de l'appareil intermédiaire qui se sont produits depuis ledit temps initial.

**23.** Système de communication selon l'une quelconque des revendications 18 à 22, quand elles sont ajoutées à la revendication 6, en l'absence d'une demande d'un changement de la puissance de transmission de l'appareil intermédiaire (RN) provenant de l'appareil de destination (UE), et après un changement de la mesure de la perte de chemin connue entre l'appareil intermédiaire et l'appareil de destination déterminée par les moyens de mise à jour de perte de chemin, les seconds moyens de calcul pouvant être utilisés pour calculer le changement de la puissance de transmission de la station de base (NB) qui est nécessaire afin de tendre à équilibrer une mesure de la qualité d'un signal de communication reçu au niveau de l'appareil intermédiaire et une mesure de la qualité d'un signal de communication reçu au niveau de l'appareil de destination.

**24.** Système de communication selon l'une quelconque des revendications 18 à 22, quand elles sont annexées à la revendication 10, dans lequel ledit signal d'entrée comprend un indicateur de la perte de chemin connue entre l'appareil intermédiaire (RN) et l'appareil de destination (UE) comme déterminé par lesdits moyens de mise à jour de perte de chemin.

**25.** Système de communication comprenant une station de base (NB), un appareil de destination (UE) et au moins un appareil intermédiaire (RN), la station de base pouvant être utilisée pour transmettre un signal de communication, via l'appareil intermédiaire ou chaque appareil intermédiaire, à l'appareil de destination, ladite station de base comprenant des moyens de contrôle (3), dans lequel chaque élément parmi l'appareil de destination et l'appareil intermédiaire comprend : des moyens de dérivation d'un indicateur pouvant être utilisés pour dériver un ou plusieurs indicateurs de la qualité d'un signal de communication reçu au niveau de l'appareil de destination ou de l'appareil intermédiaire, respectivement, dans lequel ledit appareil intermédiaire et ledit appareil de destination peuvent être utilisés pour transmettre lesdits indicateurs auxdits moyens de contrôle, les moyens de contrôle comprenant :

i) des moyens de détection de déséquilibre pouvant être utilisés pour détecter un déséquilibre entre ledit indicateur dérivé par l'appareil de destination et ledit indicateur dérivé par l'appareil intermédiaire ; et
ii) des moyens de calcul pouvant être utilisés, après la détection d'un tel déséquilibre, pour calculer une nouvelle puissance de transmission pour la station de base qui tendra à réduire ledit déséquilibre.

**26.** Système de communication selon la revendication 25, dans lequel ledit indicateur dérivé par chaque élément parmi l'appareil intermédiaire (RN) et l'appareil de destination (UE) comprend une mesure de l'intensité d'un signal de communication reçu au niveau de l'appareil de destination ou de l'appareil intermédiaire, respectivement.

**27.** Système de communication selon la revendication 25 ou 26, dans lequel ledit indicateur dérivé par chaque élément parmi ledit appareil intermédiaire et ledit appareil de destination comprend une mesure du rapport signal à interférence plus bruit (SINR) d'un signal de communication reçu au niveau de l'appareil de destination (UE) ou de l'appareil intermédiaire (RN), respectivement.

**28.** Système de communication selon la revendication 25, 26 ou 27, dans lequel lesdits moyens de détection de déséquilibre comprennent des moyens de mise à jour de perte de chemin pouvant être utilisés, après la réception desdits indicateurs dudit appareil de destination (UE) et ledit appareil intermédiaire (RN), ou après un changement d'un ou de deux desdits indicateurs reçus par lesdits moyens de contrôle, pour déterminer une mesure de la perte de chemin connue par un signal de communication transmis entre la station de base et l'appareil intermédiaire, et entre l'appareil intermédiaire et l'appareil de destination.

**29.** Système de communication selon la revendication 28, dans lequel les moyens de mise à jour de perte de chemin déterminent la mesure de la perte de chemin connue par un signal de communication transmis entre la station de base (NB) et l'appareil intermédiaire (RN) à partir d'une mesure de la puissance de transmission de la station de base quand ce signal de communication a été transmis.

30. Système de communication selon la revendication 28 ou 29, dans lequel les moyens de mise à jour de perte de chemin déterminent la mesure de la perte de chemin connue par un signal de communication transmis entre l'appareil intermédiaire (RN) et l'appareil de destination (UE) à partir d'une mesure de la puissance de transmission de l'appareil intermédiaire quand ce signal de communication a été transmis.

31. Système de communication selon la revendication 30, dans lequel l'appareil intermédiaire (RN) peut être utilisé pour transmettre un indicateur de puissance de transmission qui est indicatif d'une mesure d'une puissance de transmission courante de l'appareil intermédiaire aux moyens de mise à jour de perte de chemin, les moyens de mise à jour de perte de chemin pouvant être utilisés pour recevoir ledit indicateur de puissance de transmission et utiliser ledit indicateur de puissance de transmission pour déterminer la perte de chemin connue par un signal de communication transmis entre l'appareil intermédiaire et l'appareil de destination (UE).

32. Système de communication selon la revendication 31, dans lequel la mesure de la puissance de transmission de l'appareil intermédiaire (RN) est déterminée à partir I) d'une mesure de la puissance de transmission de l'appareil intermédiaire au niveau d'un temps initial et II) de la connaissance des changements de la puissance de transmission de l'appareil intermédiaire qui se sont produits depuis ledit temps initial.

33. Système de communication selon l'une quelconque des revendications 28 à 32, dans lequel les moyens de calcul peuvent être utilisés, après un changement de la mesure de la perte de chemin connue entre la station de base et l'appareil intermédiaire, pour calculer le changement de puissance de transmission de la station de base qui est nécessaire afin de tendre à équilibrer les indicateurs de puissance de signal dérivés au niveau de l'appareil intermédiaire et de l'appareil de destination.

34. Système de communication selon l'une quelconque des revendications 25 à 33, dans lequel les moyens de contrôle (3) peuvent être utilisés, après un calcul d'une nouvelle puissance de transmission pour la station de base (NB), pour déterminer si ladite nouvelle puissance de transmission pour la station de base est supérieure à une puissance de transmission maximum pour la station de base.

35. Système de communication selon la revendication 34, dans lequel s'il est déterminé par les moyens de contrôle (3) que ladite nouvelle puissance de transmission est supérieure à la puissance de transmission maximum de la station de base, les seconds moyens de calcul peuvent être utilisés pour calculer une seconde nouvelle puissance de transmission pour la station de base qui ne dépasse pas ledit maximum.

36. Système de communication selon la revendication 35, dans lequel lesdits moyens de calcul peuvent être utilisés, après le calcul d'une seconde nouvelle puissance de transmission pour la station de base, pour calculer une nouvelle puissance de transmission pour l'appareil intermédiaire qui tendra à réduire ou empêcher un déséquilibre entre les indicateurs de puissance de signal de l'appareil de destination (UE) et de l'appareil intermédiaire (RN).

37. Système de communication selon l'une quelconque des revendications précédentes, dans lequel les moyens de contrôle comprennent en outre des moyens de commande pouvant être utilisés pour émettre une commande vers l'appareil intermédiaire (RN) et/ou vers la station de base (NB), commandant un changement de la puissance de transmission de l'appareil intermédiaire, et/ou de la puissance de transmission de la station de base conformément à la nouvelle puissance de transmission ou aux nouvelles puissance de transmission calculée(s) par les moyens de calcul.

38. Procédé de contrôle de la puissance de transmission d'un ou plusieurs appareil(s) pouvant être utilisés pour transmettre un signal de communication dans un système de communication multi-sauts, le système de communication comprenant une station de base (NB), un appareil de destination (UE) et au moins un appareil intermédiaire (RN), la station de base pouvant être utilisée pour transmettre un signal de communication, via l'appareil intermédiaire ou chaque appareil intermédiaire, à l'appareil de destination, le procédé comprenant :

   i) la dérivation, au niveau de l'appareil de destination, d'un ou plusieurs indicateurs d'une qualité d'un signal de communication reçu au niveau de l'appareil de destination ;
   ii) la détection d'une déviation dans les indicateurs, ou l'un des indicateurs dérivé(s) par l'appareil de destination d'une valeur souhaitée ; et

iii) le calcul, après la détection d'un tel changement, d'une nouvelle puissance de transmission pour l'appareil intermédiaire, ou d'une nouvelle puissance de transmission pour l'appareil intermédiaire et la station de base, qui tendra à : a) réduire un déséquilibre entre une mesure d'une qualité d'un signal de communication reçu au niveau de l'appareil intermédiaire et une mesure de la qualité d'un signal de communication reçu au niveau de l'appareil de destination ; ou b) empêcher que ledit déséquilibre ne survienne.

**39.** Procédé de contrôle de la puissance de transmission d'un ou plusieurs appareil(s) qui peut être utilisé pour transmettre un signal de communication dans un système de communication multi-sauts, le système de communication comprenant une station de base (NB), un appareil de destination (UE) et au moins un appareil intermédiaire (RN), la station de base pouvant être utilisée pour transmettre un signal de communication, via l'appareil intermédiaire ou chaque appareil intermédiaire, à l'appareil de destination, le procédé comprenant les étapes consistant à :

i) dériver, au niveau de chaque élément parmi l'appareil de destination et l'appareil intermédiaire, un indicateur de la qualité du signal de communication reçu au niveau de l'appareil de destination, ou au niveau de l'appareil intermédiaire, respectivement ;
ii) détecter un déséquilibre entre ledit indicateur dérivé par l'appareil de destination et ledit indicateur dérivé par l'appareil intermédiaire ; et
iii) calculer, après la détection d'un tel déséquilibre, une nouvelle puissance de transmission pour la station de base, qui tendra à réduire ledit déséquilibre.

**40.** Station de base (NB) pouvant être utilisée pour transmettre un signal de communication à un appareil de destination (UE), via au moins un appareil intermédiaire (RN), la station de base comprenant :

i) des moyens de réception (5), pouvant être utilisés pour recevoir un indicateur d'un appareil de destination et des moyens de détection de la déviation d'un indicateur (1), pouvant être utilisés pour détecter une déviation dans ledit indicateur d'une valeur souhaitée, l'indicateur étant indicatif de la qualité d'un signal de communication reçu au niveau de l'appareil de destination ; ou
ii) des moyens de réception (2), pouvant être utilisés pour recevoir une demande d'une nouvelle puissance de transmission pour l'appareil intermédiaire des moyens de destination ; et
iii) des moyens de contrôle (3) ayant des premiers moyens de calcul pouvant être utilisés, après la détection d'un changement dudit indicateur reçu dudit appareil de destination, ou après la réception d'une demande provenant dudit appareil de destination, selon les circonstances, pour calculer une nouvelle puissance de transmission pour l'appareil intermédiaire, ou une nouvelle puissance de transmission pour l'appareil intermédiaire et la station de base, qui tendront à : a) réduire un déséquilibre entre une mesure de la qualité d'un signal de communication reçu au niveau de l'appareil intermédiaire et une mesure d'une qualité d'un signal de communication reçu au niveau de l'appareil de destination ; ou b) empêcher que ledit déséquilibre ne survienne.

**41.** Station de base (NB) selon la revendication 40, dans laquelle lesdits moyens de contrôle (3) peuvent être utilisés pour recevoir un signal d'entrée qui permet aux moyens de contrôle de déterminer si la demande est due à une déviation dans la variation de l'indicateur cible dérivé par l'appareil de destination qui survient en raison d'un changement de la qualité du signal reçu cible établie pour l'appareil de destination.

**42.** Station de base (NB) selon la revendication 40 ou 41, les moyens de contrôle comprenant en outre des moyens de commande pouvant être utilisés pour émettre une commande vers ledit appareil intermédiaire et/ou ladite station de base, commandant un changement de la puissance de transmission de l'appareil intermédiaire, et/ou de la puissance de transmission de la station de base conformément à la nouvelle puissance de transmission ou aux nouvelles puissance de transmission calculée(s) par les premiers moyens de calcul.

**43.** Station de base (NB) selon la revendication 40, 41 ou 42, dans laquelle les moyens de réception (2) peuvent en outre être utilisés pour recevoir un indicateur de l'appareil de destination, l'indicateur étant indicatif d'une qualité d'un signal de communication reçu au niveau de l'appareil de destination, la station de base comprenant en outre :

i) des moyens de détection de déséquilibre pouvant être utilisés pour détecter un déséquilibre entre ledit indicateur reçu de l'appareil de destination (UE) et ledit indicateur reçu dudit appareil intermédiaire (RN) ; les moyens de contrôle comprenant en outre des seconds moyens de calcul pouvant en outre être utilisés, après la détection d'un tel déséquilibre, pour calculer une nouvelle puissance de transmission pour la station de base qui tendra à réduire ledit déséquilibre.

**44.** Station de base (NB) selon la revendication 43, dans lequel les moyens de détection de déséquilibre comprennent en outre des moyens de mise à jour de perte de chemin pouvant être utilisés, après la réception desdits indicateurs dudit appareil de destination (UE) et dudit appareil intermédiaire (RN), ou après un changement d'un ou de deux desdits indicateurs, pour déterminer une mesure de la perte de chemin connue par un signal de communication transmis entre la station de base et l'appareil intermédiaire, et entre l'appareil intermédiaire et l'appareil de destination.

**45.** Station de base pouvant être utilisée pour transmettre un signal de communication à un appareil de destination, via au moins un appareil intermédiaire, la station de base étant dotée de moyens de contrôle (3) comprenant :

   i) des moyens de réception i (5), pouvant être utilisés pour recevoir un ou plusieurs indicateurs de chaque élément parmi l'appareil de destination et l'appareil intermédiaire, l'indicateur ou chaque indicateur étant indicatif d'une qualité d'un signal de communication reçu au niveau de l'appareil de destination ou de l'appareil intermédiaire, respectivement ;
   ii) des moyens de détection de déséquilibre pouvant être utilisés pour détecter un déséquilibre entre ledit indicateur reçu de l'appareil de destination et ledit indicateur reçu de l'appareil intermédiaire ; et
   iii) des moyens du calcul pouvant être utilisés, après la détection d'un tel déséquilibre, pour calculer une nouvelle puissance de transmission pour la station de base qui tendra à réduire ledit déséquilibre.

**46.** Station de base (NB) selon la revendication 45, dans lequel les moyens de détection de déséquilibre comprennent en outre des moyens de mise à jour de perte de chemin pouvant être utilisés, après la réception desdits indicateurs dudit appareil de destination et dudit appareil intermédiaire, ou après un changement d'un ou de deux desdits indicateurs, pour déterminer une mesure de la perte de chemin connue par un signal de communication transmis entre la station de base et l'appareil intermédiaire, et entre l'appareil intermédiaire et l'appareil de destination.

**47.** Station de base (NB) selon la revendication 45 ou 46, les moyens de contrôle (3) comprenant en outre des moyens de commande pouvant être utilisés pour émettre une commande vers ladite station de base commandant un changement de la puissance de transmission de la station de base conformément à la nouvelle puissance de transmission calculée par les moyens de calcul.

**48.** Programme informatique qui, quand il est exécuté par un ordinateur, permet à l'ordinateur de procéder comme la station de base du système de communication revendiqué dans l'une quelconque des revendications 1 à 37, ou de procéder comme la station de base selon l'une quelconque des revendications 40 à 47.

**49.** Programme informatique selon la revendication 48, porté par un support porteur.

**50.** Programme informatique selon la revendication 49, dans lequel ledit médium porteur, est un support d'enregistrement.

**51.** Programme informatique selon la revendication 49, dans lequel ledit support porteur est un support de transmission.

Fig.1A

Fig.1B

Fig.2A

Fig.2B

| UE | RN | NB |
|---|---|---|

```
┌─────────────────┐
│ RSS @UE from    │
│ RN does not     │
│ meet target     │
└────────┬────────┘
         │
         ▼
┌─────────────────┐      ┌─────────────────┐      ┌─────────────────┐
│ Request a charge│      │ RN relays request│     │ Receive request │
│ in RN transmit  │─────▶│ to controlling NB│────▶│ for change in RN│
│ power           │      │                  │     │ tx power from UE│
└─────────────────┘      └─────────────────┘      └────────┬────────┘
                                                            │
                                                            ▼
                                                  ┌─────────────────┐   ┌─────────────────┐
                                                  │ Calculate new RN│   │ Input propagation│
                                                  │ power (taking   │   │ losses          │
                                                  │ limits into     │   │                 │
                                                  │ account)        │   └────────┬────────┘
                                                  └────────┬────────┘            │
                                                           │                     │
                                                           ▼                     │
                                                      ╱─────────╲     No  ┌─────────────────┐
                                                     ╱ Change in  ╲──────▶│ Calculate new NB│
                                                     ╲ RN-UE loss ╱       │ power using     │
                                                      ╲    ?    ╱◀────────│ appropriate     │
                                                       ╲──────╱           │ equation        │
                                                          │               └────────┬────────┘
                                                          │ Yes                    │
                                                          │                        ▼
                                                          │                   ╱─────────╲   No  ┌─────────────────┐
                                                          │                  ╱   Can     ╲─────▶│ Revise NB transmit│
                                                          │                  ╲ NB power be╱     │ power and recalculate│
                                                          │                   ╲ satisfied ╱     │ RN transmit power │
                                                          │                    ╲   ?    ╱       └────────┬────────┘
                                                          │                      ╲────╱                  │
                                                          │                        │ Yes                 │
                                                          │                        ▼                     │
┌─────────────────┐      ┌─────────────────┐      ┌─────────────────┐             │
│ Change transmit │      │ Signal change   │      │ Change NB transmit│◀──────────┘
│ power according │◀─────│ in RN transmit  │◀─────│ power (must coincide│
│ to received     │      │ power to RN     │      │ with RN change) │
│ command from NB │      │                 │      └─────────────────┘
└─────────────────┘      └─────────────────┘
```

*Fig.3*

| UE | RN | NB |
|---|---|---|

| Transmit RSS at UE to RN | Transmit RSS at UE & RN to NB | Receive RSS from UE & RN |

Update the propagation loss for the RN-UE and NB-RN links ← Current NB & RN transmit power

Any change in NB-RN loss ? — No → Any change in RN-UE loss undetected by part 1 ? — No → ( Repeat algorithm )

Yes ↓ ← Yes

Calculate new NB transmit power using appropriate equation ← Current RN Transmit power

Can NB power be satisfied — No → Revise NB transmit power

Yes ↓

↓ Calculate modification required to RN transmit power

Change NB transmit power (coincide with any RN change) ← Signal change in RN transmit power to RN

( Repeat algorithm )

Change transmit power according to received command from NB

*Fig.4*

47

UE (D)                    RN                      NB (S)

Indicator change detection means

Request relay

Request receiving means    2

1

4

Control means: First calc. means    3    → Command

## Fig.5A

UE (D)                                            NB (S)

Indicator

Indicator receiving means    5

Indicator change detection means    1

Control means: First calc means    3    → Command

## Fig.5B

SINR at cell edge for UE connected to RN for RN at 0.5 of cell radius
(two cell analysis)

SINR at the UE as a function of NB and RN transmit
power with RN positioned at 0.5 cell radius.

*Fig.6A*

SINR at cell edge for UE connected to RN for RN at 0.75 of cell radius (two cell analysis)

SINR at the UE as a function of NB and RN transmit power with RN positioned at 0.75 cell radius.

Fig.6B

SINR at cell edge for UE connected to RN (RN at 0.5 of cell radius of 1867m)(AF with TDD)

SINR at the UE as a function of NB and RN transmit power with RN positioned at 0.5 cell radius.

## Fig.7A

SINR at cell edge for UE connected to RN (RN at 0.75 of cell radius of 1867m)(AF with TDD)

SINR at the UE as a function of NB and RN transmit power with RN positioned at 0.75 cell radius.

Fig.7B

Relay Node Transmit Power (dBm)

—◇— RN@1400m (TDD 1 Cell)      —▣— RN@933m (TDD 1 Cell)

···◇··· RN@1400m (TDD 2 Cells)    ···▣··· RN@933m (TDD 2 Cells)

—✕— RN@1400m (FDD 1 Cell)      —○— RN@933m (FDD 1 Cell)

···✕··· RN@1400m (FDD 2 Cells)    ···○··· RN@933m (FDD 2 Cells)

Optimal NB transmit power as a function of RN transmit power for a
regenerative relay for FDD and TDD and for each deployment scenario.

*Fig.8A*

Optimal NB transmit power as a function of RN transmit power for a non-regenerative relay for FDD for each deployment scenario.

*Fig.8B*

*Optimal NB transmit power as a function of RN transmit power for a non-regenerative relay for FDD for each deployment scenario.*

# Fig.8C

Fig.9A    Gain in average packet call throughput for deployment scenario 1.

Fig.9B    Gain in average packet call throughput for deployment scenario 2.

Optimal NB transmit power as a function of RN transmit power for a non-regenerative relay for TDD for each deployment scenario where it is assumed the NB to UE link has a 3 dB gain compared with the other links.

*Fig.10*

## REFERENCES CITED IN THE DESCRIPTION

### Patent documents cited in the description

- US 2005063356 A1
- WO 2004107693 A